(19) Europäisches Patentamt / European Patent Office / Office européen des brevets

(11) **EP 4 404 492 A1**

(12) **EUROPEAN PATENT APPLICATION**
published in accordance with Art. 153(4) EPC

(43) Date of publication:
**24.07.2024 Bulletin 2024/30**

(21) Application number: **22874636.8**

(22) Date of filing: **14.09.2022**

(51) International Patent Classification (IPC):
**H04L 5/00** (2006.01)

(52) Cooperative Patent Classification (CPC):
**H04L 5/00; H04W 72/23**

(86) International application number:
**PCT/CN2022/118760**

(87) International publication number:
**WO 2023/051249 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 CN 202111162721**

(71) Applicant: **Huawei Technologies Co., Ltd.
Shenzhen, Guangdong 518129 (CN)**

(72) Inventors:
- **LIU, Xiaoqing
  Shenzhen, Guangdong 518129 (CN)**
- **ZHANG, Yongping
  Shenzhen, Guangdong 518129 (CN)**
- **YU, Zheng
  Shenzhen, Guangdong 518129 (CN)**
- **GONG, Mingxin
  Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS**

(57) Embodiments of this application relate to the field of communication technologies, and provide a communication method and apparatus, to resolve a problem in the conventional technology that signaling overheads are high due to switching between active/inactive states of a plurality of reference signal resource sets. The method includes: A terminal device obtains configuration information, where the configuration information is used to configure a plurality of reference signal RS resource sets, and the plurality of RS resource sets include at least a first resource set and a second resource set. The terminal device obtains first signaling, where the first signaling indicates to activate the second resource set, and the first resource set is deactivated when the second resource set is activated. The terminal device sends a first RS on an RS resource included in the second resource set.

FIG. 6b

**Description**

This application claims priority to Chinese Patent Application No. 202111162721.9, filed with the China National Intellectual Property Administration on September 30, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

A reference signal (Reference Signal, RS) is a signal sent by a transmit end to a receive end for channel estimation or channel sounding. For example, when the transmit end is a terminal device, and the receive end is a network device, the network device may configure an uplink sounding reference signal (Sounding Reference Signal, SRS) for the terminal device, so that the terminal device can send the SRS in a manner configured by the network device. The network device can obtain uplink channel information, downlink channel information, or the like based on the received SRS.

The network device may configure one or more reference signal resource sets for the terminal device by using higher layer configuration information. The reference signal resource set may include at least one time-frequency resource used by the terminal device to send a reference signal and another configuration parameter. A type of a resource configured by the network device for the reference signal may be periodic, aperiodic, or semi-persistent.

The network device may send indication information to the terminal device, to indicate to activate or deactivate the reference signal resource set, thereby implementing switching between a plurality of reference signal resource sets. However, in the conventional technology, signaling overheads required for implementing resource set switching are high, and transmission efficiency is low.

**SUMMARY**

This application provides a communication method and apparatus, to resolve a problem in the conventional technology that signaling overheads are high due to switching between active/inactive states of a plurality of reference signal resource sets.

To achieve the foregoing objective, this application uses the following technical solutions.

According to a first aspect, a communication method is provided. The method includes: obtaining configuration information, where the configuration information is used to configure a plurality of reference signal RS resource sets, and the plurality of RS resource sets include at least a first resource set and a second resource set; obtaining first signaling, where the first signaling indicates to activate the second resource set, and the first resource set is deactivated when the second resource set is activated; and sending a first RS on an RS resource included in the second resource set.

In the foregoing technical solution, a network device does not need to change an existing signaling format of indication information for activating or deactivating an RS resource set, and may further indicate to deactivate the first resource set in an implicit manner when indicating to activate the second resource set. Therefore, signaling overheads of switching an active state of the RS resource set by the network device for a terminal device can be reduced, and time required for switching the active state of the RS resource set can be further shortened, thereby improving communication efficiency.

In a possible implementation, resource types of the first resource set and the second resource set are semi-persistent, aperiodic, or periodic. The resource types of the first resource set and the second resource set are the same, or the resource types of the first resource set and the second resource set are different. For example, the resource types of the first resource set and the second resource set are both semi-persistent. For another example, a resource type of the first resource set is aperiodic, and a resource type of the second resource set is semi-persistent.

Based on the foregoing implementation, active/inactive states of aperiodic RS resource sets can be switched more flexibly, triggerable/untriggerable states of aperiodic RS resource sets can be switched more flexibly, or active/inactive states of RS resource sets of different resource types can be switched more flexibly, thereby improving scheduling flexibility.

In a possible implementation, the first resource set is deactivated based on the first signaling.

In a possible implementation, the method includes: obtaining configuration information, where the configuration information is used to configure a plurality of reference signal RS resource sets, and the plurality of RS resource sets include at least a first resource set and a second resource set; obtaining first signaling, where the first signaling indicates to activate the second resource set; determining that the first resource set is deactivated; and sending a first RS on an RS resource included in the second resource set.

In a possible implementation, the first signaling includes first information and second information, the first information indicates a second resource set identity, and the second information indicates to activate the RS resource set corresponding to the RS resource set identity indicated by the first information. Alternatively, the first signaling includes first information and second information, the first information indicates the second resource set, and the second information indicates to activate the RS resource set indicated by the first information.

In the foregoing possible implementation, the first signaling includes an indication of the RS resource set identity and an indication of activating the RS resource set. A predefined rule is used, so that a terminal device can determine, based on the first signaling, to deactivate the first resource set when activating the second resource set. In this way, an active/inactive state is switched between different RS resource sets based on one piece of signaling, thereby reducing signaling overheads.

In a possible implementation, before the obtaining first signaling, the method further includes: obtaining second signaling, where the second signaling indicates to activate the first resource set, the second signaling includes third information and fourth information, the third information indicates a first resource set identity, and the fourth information indicates activation; and sending a second RS on an RS resource included in the first resource set.

In the foregoing possible implementation, before a network device sends the first signaling to activate the second resource set and deactivate the first resource set, the network device may send the second signaling to activate the first resource set, to switch an active/inactive state between different RS resource sets, thereby avoiding RS resource collision between terminal devices.

In a possible implementation, before sending a first RS on an RS resource included in the second resource set, sending the second RS on the RS resource included in the first resource set is stopped. Alternatively, before starting to apply an assumption of sending the first RS on the RS resource included in the second resource set, the terminal device applies an assumption of stopping sending the second RS on the RS resource included in the first resource set.

In a possible implementation, the first signaling is obtained in a first time unit. Sending the second RS is stopped starting from a time unit after a first time interval elapses in the first time unit; and/or the first RS is sent starting from a time unit after a second time interval elapses in the first time unit.

In the foregoing possible implementation, the first RS is sent on the RS resource included in the second resource set, and the second RS is sent on the RS resource included in the first resource set. After determining that the first resource set is deactivated, the terminal device may apply the assumption of stopping sending the second RS on the RS resource included in the first resource set starting from a first time unit after the first time interval, and apply the assumption of sending the first RS on the RS resource included in the second resource set starting from a first time unit after the second time interval. A length of the second time interval is greater than a length of the first time interval. Based on this design, it can be ensured that the terminal device maintains only one activated RS resource set at a same moment, thereby reducing processing complexity of the terminal device. Further, flexibility and real-time performance of resource switching are improved, and communication efficiency is improved.

In an optional implementation, in this embodiment of this application, a quantity of RS resource sets that are simultaneously in an active state and that are supported by the terminal device is 1. Alternatively, in this embodiment of this application, a quantity of RS resource sets that are in an active state and that are supported by the terminal device in a first time period is 1, and the first time period may be one or more slots.

In a possible implementation, the method may further include: reporting capability information to the network device, where the capability information indicates that a maximum quantity of RS resource sets that are simultaneously in the active state and that are supported by the terminal device is 1, or the capability information indicates that the terminal device supports deactivation of the first resource set when the second resource set is activated.

In the possible implementation, whether the first resource set is deactivated is associated with the capability information reported by the terminal device. When the maximum quantity of RS resource sets that are simultaneously in the active state and that are supported by the terminal device is 1, the terminal device may deactivate, based on the first signaling, the first resource set when the second resource set is activated. Therefore, based on the foregoing implementation, it is determined, based on the capability information reported by the terminal device, whether an active/inactive state of one resource set is associated with another resource set, so that a signaling function is more flexible, and compatibility with an existing protocol and signaling is maintained as much as possible. Resource set indications for different types of terminal devices are implemented, so that scheduling flexibility is improved, and signal transmission efficiency is improved.

In a possible implementation, the capability information sent by the terminal device indicates whether the terminal device supports deactivation of the first resource set when the second resource set is activated. If the terminal device does not support deactivation of the first resource set when the second resource set is activated, the network device deactivates the first resource set before activating the second resource set. If the terminal device supports deactivation of the first resource set when the second resource set is activated, the network device may simultaneously activate the second resource set and deactivate the first resource set.

In a possible implementation, the configuration information further indicates that usage corresponding to the first resource set and usage corresponding to the second resource set are both set to antenna switching.

In a possible implementation, the configuration information further indicates that usage corresponding to the first resource set and usage corresponding to the second resource set are different.

In the foregoing implementation, it can be ensured that two RS resource sets are not simultaneously in an active state when usage of the two RS resource sets is the same or different. Therefore, a possibility of collision between the two RS resource sets is prevented, and implementation complexity of the terminal device is reduced.

In a possible implementation, the first resource set and the second resource set are associated with a same antenna configuration.

In the foregoing implementation, it is restricted that the two RS resource sets are not simultaneously in the active state only when antenna configurations of the two RS resource sets are the same. The two RS resource sets may be simultaneously in the active state when the antenna configurations of the two RS resource sets are different. This reduces implementation complexity of the terminal device and increases scheduling flexibility.

In a possible implementation, the first resource set and the second resource set correspond to a same spatial relation.

In the foregoing implementation, it is restricted that the two RS resource sets are not simultaneously in the active state only when spatial relations of the two RS resource sets are the same. The two RS resource sets may be simultaneously in the active state when the spatial relations of the two RS resource sets are different. This reduces implementation complexity of the terminal device and increases scheduling flexibility.

According to a second aspect, a communication method is provided. The method includes: sending configuration information, where the configuration information is used to configure a plurality of reference signal RS resource sets, and the plurality of RS resource sets include at least a first resource set and a second resource set; sending first signaling, where the first signaling indicates to deactivate the first resource set when the second resource set is activated; and receiving a first RS on an RS resource included in the second resource set.

In a possible implementation, resource types of the first resource set and the second resource set are semi-persistent, aperiodic, or periodic. The resource types of the first resource set and the second resource set are the same, or the resource types of the first resource set and the second resource set are different. For example, the resource types of the first resource set and the second resource set are both semi-persistent. For another example, a resource type of the first resource set is aperiodic, and a resource type of the second resource set is semi-persistent.

In a possible implementation, the first signaling includes first information and second information, the first information indicates a second resource set identity, and the second information indicates to activate the RS resource set corresponding to the RS resource set identity indicated by the first information. Alternatively, the first signaling includes first information and second information, the first information indicates the second resource set, and the second information indicates to activate the RS resource set indicated by the first information.

In a possible implementation, before the sending first signaling, the method further includes: sending second signaling, where the second signaling indicates to activate the first resource set, the second signaling includes third information and fourth information, the third information indicates a first resource set identity, and the fourth information indicates activation; and receiving a second RS on an RS resource included in the first resource set.

In a possible implementation, before the receiving a first RS on an RS resource included in the second resource set, the method further includes: stopping receiving the second RS on the RS resource included in the first resource set. Alternatively, before starting to apply an assumption of sending the first RS on the RS resource included in the second resource set, the terminal device applies an assumption of stopping sending the second RS on the RS resource included in the first resource set.

In a possible implementation, the receiving a first RS and the stopping receiving a second RS specifically include: sending the first signaling in a first time unit; and stopping receiving the second RS starting from a time unit after a first time interval elapses in the first time unit; and/or receiving the first RS starting from a time unit after a second time interval elapses in the first time unit. The stopping receiving the second RS means that because the terminal device stops sending the second RS on the RS resource included in the second resource set, a network device stops receiving the second RS, and does not restart receiving the second SRS until the network device sends signaling for activating the first resource set.

In a possible implementation, the first resource set is deactivated, and the method further includes: if HARQ-ACK information is received, stopping receiving the second RS on the RS resource included in the first resource set; or if the HARQ-NACK information is received or the HARQ-ACK information is not received, continuing to receive the second RS on the RS resource included in the first resource set.

In a possible implementation, the receiving a first RS and the stopping receiving a second RS specifically include: sending the first signaling in a first time unit; and applying the assumption of stopping receiving the second RS starting from a time unit after a first time interval elapses in the first time unit; and/or applying the assumption of sending the first RS on the RS resource included in the second resource set starting from a first time unit after a second time interval elapses in the first time unit. A length of the second time interval is greater than a length of the first time interval. Based on this design, it can be ensured that the terminal device maintains only one activated RS resource set at a same moment, thereby reducing processing complexity of the terminal device. Further, flexibility and real-time performance of resource switching are improved, and communication efficiency is improved.

In a possible implementation, the method further includes: receiving capability information from a terminal device, where the capability information indicates that a quantity of RS resource sets that are simultaneously in an active state and that are supported by the terminal device is 1, or the capability information indicates that the terminal device supports deactivation of the first resource set when the second resource set is activated.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

According to a third aspect, a communication method is provided. The method includes: obtaining configuration information, where the configuration information is used to configure a plurality of reference signal RS resource sets, and the plurality of resource sets include at least a first resource set and a second resource set; and obtaining first signaling, where the first signaling includes first information and second information, the first information indicates to deactivate the first resource set, and the second information indicates whether to activate the second resource set.

In the foregoing technical solution, a network device may add one or more fields to indication information for deactivating a semi-persistent RS resource set, or redefine one or more fields, so that same signaling indicates whether to activate another RS resource set when an RS resource set is deactivated. Therefore, signaling overheads of switching the RS resource set by the network device for a terminal device can be reduced, and time required for switching the RS resource set can be further shortened, thereby improving communication efficiency.

In a possible implementation, resource types of the first resource set and the second resource set are set to semi-persistent.

In a possible implementation, the second information includes at least one bit, and the at least one bit indicates, in a bitmap manner, that at least one resource set in the plurality of resource sets is activated or not activated. Inactivation means that the resource set is not activated, and a state of the resource set remains an inactive state.

In a possible implementation, the at least one bit is set to 1 to indicate to activate the resource set corresponding to the bit, or the one bit is set to 0 to indicate to deactivate the resource set corresponding to the bit.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

In a possible implementation, if the first information indicates to activate the first resource set, the first signaling further includes fourth information, and the fourth information is carried in at least one reserved bit. Alternatively, if the configuration information is used to configure only one RS resource set, the first signaling further includes fourth information, and the fourth information is carried in at least one reserved bit.

In the foregoing possible implementation, when the first information in the first signaling sent by the network device indicates activation, the terminal device may ignore the fourth information, or a MAC entity may ignore the fourth information, so that an indication manner is flexible in a case in which the signaling overheads are reduced.

In the foregoing possible implementation, when the first information in the first signaling sent by the network device indicates deactivation, the terminal device may determine, based on an indication of the second information in the first signaling, to activate or deactivate the second resource set, thereby improving flexibility of an indication manner. In addition, signaling overheads of switching an SP resource set are effectively reduced.

In a possible implementation, the fourth information includes reserved bits, and the reserved bits are all set to 0. Alternatively, a field length of the fourth information is 0.

In a possible implementation, before the obtaining first signaling, the method further includes: obtaining second signaling, where the second signaling indicates to activate the first resource set, the second signaling includes fifth information and sixth information, the fifth information indicates a first resource set identity, and the sixth information indicates to activate an RS resource set indicated by the fifth information; and sending a reference signal on an RS resource included in the first resource set.

In the foregoing possible implementation, before the network device sends the first signaling to deactivate the first resource set, the network device may send the second signaling to activate the first resource set, to implement flexible switching between SP resource sets, and avoid RS resource collision between terminal devices.

In a possible implementation, if the second information indicates to activate the second resource set, the method further includes: before sending a first RS on an RS resource included in the second resource set, stopping sending a second RS on the RS resource included in the first resource set.

In a possible implementation, the first signaling is obtained in a first time unit. Sending the second RS is stopped starting from a time unit after a first time interval elapses in the first time unit; and/or the first RS is sent starting from a time unit after a second time interval elapses in the first time unit.

In the foregoing possible implementation, the first RS is sent on the RS resource included in the second resource set, and the second RS is sent on the RS resource included in the first resource set. After determining that the first resource set is deactivated, the terminal device may apply an assumption of stopping sending the second RS on the RS resource included in the first resource set starting from a first time unit after the first time interval, and apply an assumption of sending the first RS on the RS resource included in the second resource set starting from a first time unit after the second time interval. A length of the second time interval is greater than a length of the RS first time interval. Based on this design, it can be ensured that the terminal device maintains only one activated resource set at a same moment, thereby reducing processing complexity of the terminal device. Further, flexibility and real-time performance of resource switching are improved, and communication efficiency is improved.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

According to a fourth aspect, a communication method is provided. The method includes: sending configuration information, where the configuration information is used to configure a plurality of reference signal RS resource sets, and the plurality of resource sets include at least a first resource set and a second resource set; and sending first signaling, where the first signaling includes first information and second information, the first information indicates to deactivate the first resource set, and the second information indicates whether to activate the second resource set.

In a possible implementation, resource types of the first resource set and the second resource set are set to semi-persistent.

In a possible implementation, the second information includes at least one bit, and the at least one bit indicates, in a bitmap manner, that at least one resource set in the plurality of resource sets is activated or not activated.

In a possible implementation, the at least one bit is set to 1 to indicate to activate a resource set corresponding to the bit, or the one bit is set to 0 to indicate to deactivate a resource set corresponding to the bit.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

In a possible implementation, if the first information indicates to activate the first resource set, the first signaling further includes fourth information, and the fourth information is carried in at least one reserved bit.

In a possible implementation, the fourth information includes reserved bits, and the reserved bits are all set to 0. Alternatively, a field length of the fourth information is 0.

In a possible implementation, the fourth information includes reserved bits, and the reserved bits are all set to 0. Alternatively, a field length of the fourth information is 0.

In a possible implementation, before the sending first signaling, the method further includes: sending second signaling, where the second signaling indicates to activate the first resource set, the second signaling includes fifth information and sixth information, the fifth information indicates a first resource set identity, and the sixth information indicates to activate an RS resource set indicated by the fifth information; and receiving a reference signal on an RS resource included in the first resource set.

In a possible implementation, if the second information indicates to activate the second resource set, the method further includes: receiving a reference signal on an RS resource included in the second resource set, and stopping receiving a reference signal on the RS resource included in the first resource set.

In a possible implementation, if the second information indicates to activate the second resource set, the method further includes: before sending a first RS on an RS resource included in the second resource set, stopping sending a second RS on the RS resource included in the first resource set.

In a possible implementation, the first signaling is obtained in a first time unit. Sending the second RS is stopped starting from a time unit after a first time interval elapses in the first time unit; and/or the first RS is sent starting from a time unit after a second time interval elapses in the first time unit.

In any one of the implementations of the first aspect to the fourth aspect, the usage refers to a configuration parameter usage included in the configuration information. For example, the configuration information further configures that usage of the first resource set and usage of the second resource set are both set to antenna switching. In other words, a configuration parameter usage included in the first resource set and a configuration parameter usage included in the second resource set in the configuration information are both set to antennaSwitching.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

In a possible implementation, the configuration information is carried in radio resource control RRC signaling.

According to a fifth aspect, a communication method is provided, applied to a terminal device. The method includes: obtaining configuration information, where the configuration information is used to configure N reference signal RS resource sets, and N is an integer greater than 1; obtaining first signaling, where the first signaling includes a first field; when the first field is a first value, the first field indicates to activate M RS resource sets in the N RS resource sets; or when the first field is a second value, the first field indicates to deactivate K RS resource sets in the N RS resource sets; and M is a positive integer not greater than N, and K is a positive integer not greater than N; and determining an activated resource set and/or a deactivated RS resource set in the N RS resource sets based on the first signaling.

In the foregoing technical solution, that the first signaling includes a first field means that the first signaling includes only the first field, or the first signaling includes another field in addition to the first field. That an RS resource set is deactivated means that a state of the RS resource set is a deactivated state, or the RS resource set is not activated, or the RS resource set is deactivated, or the RS resource set is an inactive resource set. The first value and the second value are integers, for example, the first value is 0 or 1, and the second value is 1 or 0, where the second value is different from the first value.

In the foregoing technical solution, a network device does not need to change an existing signaling format of indication information for activating or deactivating an RS resource set, and may use one piece of signaling to indicate active/inactive states of two RS resource sets. Therefore, signaling overheads of switching an active state of the RS resource set by the network device for the terminal device can be reduced, and time required for switching the active state of the RS resource set can be further shortened, thereby improving communication efficiency.

In a possible implementation, the first field indicates to activate the M RS resource sets in the N RS resource sets, and the remaining N-M RS resource sets in the N RS resource sets other than the M RS resource sets are inactive resource sets.

In a possible implementation, the first field indicates to activate the M RS resource sets in the N RS resource sets, the first signaling further includes an RS resource set identity field, and the RS resource set identity field indicates the M RS resource sets.

In a possible implementation, the first field indicates to deactivate the K RS resource sets in the N RS resource sets, the first signaling does not include an RS resource set identity field or the first signaling further includes an RS resource set identity field, and one or more bits in the RS resource set identity field are reserved bits.

In a possible implementation, N=2, and M=1; and/or K=N.

In a possible implementation, the terminal device reports capability information to the network device, where the capability information indicates whether the terminal device supports determining the activated resource set and/or the deactivated RS resource set in the N RS resource sets based on the first signaling.

In the foregoing technical solution, the terminal device may determine, based on a capability reported by the terminal device, a manner of interpreting higher layer signaling. To be specific, the first signaling indicates a state of one RS resource set, or indicates states of the two RS resource sets. In this way, when a format of the higher layer signaling remains unchanged, more space for interpreting the higher layer signaling is provided and scheduling flexibility is improved.

According to a sixth aspect, a communication method is provided, applied to a network device. The method includes: sending configuration information, where the configuration information is used to configure N reference signal RS resource sets, and N is an integer greater than 1; and sending first signaling, where the first signaling includes a first field; when the first field is a first value, the first field indicates to activate M RS resource sets in the N RS resource sets; or when the first field is a second value, the first field indicates to deactivate K RS resource sets in the N RS resource sets; and M is a positive integer not greater than N, and K is a positive integer not greater than N.

In a possible implementation, the first field indicates to activate the M RS resource sets in the N RS resource sets, and the remaining N-M RS resource sets in the N RS resource sets other than the M RS resource sets are inactive resource sets.

In a possible implementation, the first field indicates to activate the M RS resource sets in the N RS resource sets, the first signaling further includes an RS resource set identity field, and the RS resource set identity field indicates the M RS resource sets.

In a possible implementation, the first field indicates to deactivate the K RS resource sets in the N RS resource sets, the first signaling does not include an RS resource set identity field or the first signaling further includes an RS resource set identity field, and one or more bits in the RS resource set identity field are reserved bits.

In a possible implementation, N=2, and M=1; and/or K=N.

In a possible implementation, capability information reported by a terminal device is received, where the capability information indicates whether the terminal device supports determining an activated resource set and/or a deactivated RS resource set in the N RS resource sets based on the first signaling.

According to a seventh aspect, a communication method is provided. The method includes: obtaining resource set configuration information, where the resource set configuration information includes M pieces of first configuration information, k pieces of first configuration information exist in the M pieces of first configuration information, the k pieces of first configuration information correspond to k reference signal RS resources, and each of the k pieces of first configuration information includes a plurality of configuration parameters; M-k pieces of first configuration information exist in the M pieces of first configuration information, the M-k pieces of first configuration information correspond to M-k RS resources, and each of the M-k pieces of first configuration information includes one configuration parameter; and a configuration parameter associated with each of the M-k RS resources is a configuration parameter included in first configuration information corresponding to the RS resource; obtaining first signaling; determining, based on the first signaling, a configuration parameter associated with each of the k RS resources, or determining, based on the first signaling, an index of a configuration parameter associated with each of the k RS resources; and sending an RS on M RS resources based on a configuration parameter associated with each of the M RS resources, where k is an integer greater than 0 and less than or equal to M, and M is a positive integer.

In the foregoing technical solution, the RS resource corresponding to the first configuration information means that the first configuration information is used to configure the RS resource, or the first configuration information is used to configure sending information of the RS resource, or the first configuration information is used to configure the RS resource for sending an RS, or the first configuration information includes configuration information of the RS resource. For example, the first configuration information is an SRS-Resource. The SRS-Resource includes an srs-ResourceId, and different srs-ResourceIds correspond to different RS resources.

In the foregoing technical solution, the configuration parameter included in the first configuration information is a candidate configuration parameter for configuring the RS resource based on higher layer signaling (for example, RRC). A configuration parameter associated with an RS resource is a configuration parameter that is used to transmit an RS and that is indicated by higher layer signaling (for example, a MAC CE) for the RS resource. The configuration parameter associated with the RS resource is one or more configuration parameters included in the candidate configuration parameter.

In the foregoing technical solution, the configuration information of a network device includes the plurality of configuration parameters. An indication of the configuration parameter associated with the RS resource is added, based on the first signaling, to an indication for activating an RS resource set, so that a resource for sending an RS by a terminal device is staggered from a resource for sending an RS by another terminal device in time domain. Therefore, a probability of RS resource collision between different terminal devices is reduced, and transmission efficiency is improved. In addition, because the network device configures only one SP-RS resource set for the terminal device, compared with configuring at least two SP-RS resource sets, the terminal device needs to store information about only the SP-RS resource set, so that storage costs of the terminal device can be effectively reduced.

In a possible implementation, the determining, based on the first signaling, an index of a configuration parameter associated with each of the k RS resources specifically includes: The first signaling includes a first field; and when the first field indicates a first index, the configuration parameter index associated with each of the k RS resources is the first index; or when the first field indicates a first configuration parameter, the configuration parameter associated with each of the k RS resources is the first configuration parameter.

In the foregoing possible implementation, the network device includes, in the first signaling, an index identity corresponding to the configuration parameter, to indicate the corresponding configuration parameter, so that flexibility of indicating the configuration parameter corresponding to the RS resource can be improved, and signaling overheads can be reduced. Further, time-domain location adjustment for sending an SP resource set is implemented, and RS resource collision between terminal devices is avoided.

In a possible implementation, the first signaling includes a second field, and the second field includes at least k bits. The at least k bits indicate, in a bitmap manner, the configuration parameter associated with each of the k RS resources; or the at least k bits indicate, in a bitmap manner, the configuration parameter index associated with each of the k RS resources. k is an integer greater than or equal to 1. The bitmap manner refers to at least one of the following manners: each of the at least k bits corresponds to one RS resource; different bits in the at least k bits correspond to different RS resources; each of the at least k bits indicates a configuration parameter associated with one RS resource; and different bits in the at least k bits indicate configuration parameters associated with different RS resources.

In a possible implementation, a quantity of bits included in the second field is predefined. For example, the quantity of bits included in the second field is 1, 2, 4, 6, or 8. Further, when k is less than the quantity of bits included in the second field, the terminal device ignores a bit other than a bit corresponding to the k RS resources, or a MAC entity ignores a bit other than a bit corresponding to the k RS resources.

In a possible implementation, the quantity of bits included in the second field is configured based on a higher layer parameter. For example, the quantity of bits included in the second field is equal to a quantity of RS resources included in the resource set. For another example, the quantity of bits included in the second field is equal to k.

In a possible implementation, an RS resource ID of an RS resource corresponding to an $i^{th}$ bit in the at least k bits is less than an RS resource ID of an RS resource corresponding to an $(i+1)^{th}$ bit, where i is a positive integer.

In a possible implementation, a plurality of configuration parameters included in first configuration information corresponding to each RS resource indicate a periodicity value and/or a time domain offset value of the RS resource.

In the foregoing possible implementation, an SP-RS resource configuration of the terminal device by the network device corresponds to at least two different sets of time domain resource parameters, so that different time domain configuration parameters for sending RS resources can be configured for different terminal devices, to send the RS resources in a staggered manner in time domain. The collision probability is reduced and communication efficiency is improved.

In the foregoing possible implementation, when the network device configures only one SP-RS resource set for the terminal device, the network device adds the indication of the configuration information corresponding to the RS resource to the indication for activating the RS resource set, so that the resource for sending the RS by the terminal device is staggered from the another terminal device in time domain. Therefore, the probability of RS resource collision between different terminal devices is reduced, and transmission efficiency is improved. In addition, because the network device configures only one SP-RS resource set for the terminal device, compared with configuring the at least two SP-RS resource sets, the terminal device needs to store the information about only the SP-RS resource set, so that the storage costs of the terminal device can be effectively reduced.

In a possible implementation, a first RS resource belongs to a first resource set, and the first resource set includes a plurality of RS resources. At least two configuration parameters are configured for each RS resource, and one of the at least two configuration parameters of each RS resource corresponds to a first identity.

In the foregoing possible implementation, indication information sent by the network device may indicate configuration parameters associated with the plurality of RS resources. For example, identities of the configuration parameters, such as the first identity, may indicate that all the plurality of RS resources are associated with the first configuration parameter or the configuration parameter associated with the first identity. Therefore, flexibility of indicating configuration parameters of an RS resource is improved, and the signaling overheads are reduced.

In a possible implementation, that the first signaling indicates that a configuration parameter of the first RS resource is the first configuration parameter includes: The first signaling includes the first field, the first field includes at least one bit, and one of the at least one bit indicates the configuration parameter of the first RS resource.

In a possible implementation, the configuration information is carried in radio resource control RRC signaling.

According to an eighth aspect, a communication method is provided. The method includes: sending resource set configuration information, where the resource set configuration information includes M pieces of first configuration information, k pieces of first configuration information exist in the M pieces of first configuration information, the k pieces of first configuration information correspond to k reference signal RS resources, and each of the k pieces of first configuration information includes a plurality of configuration parameters; M-k pieces of first configuration information exist in the M pieces of first configuration information, the M-k pieces of first configuration information correspond to M-k RS resources, and each of the M-k pieces of first configuration information includes one configuration parameter; and a configuration parameter associated with each of the M-k RS resources is a configuration parameter included in first configuration information corresponding to the RS resource; sending first signaling, where the first signaling indicates a configuration parameter associated with each of the k RS resources or an index of a configuration parameter; and receiving an RS on M RS resources, where k is an integer greater than 0 and less than or equal to M, and M is a positive integer.

In a possible implementation, the first signaling includes a first field. When the first field indicates a first index, the configuration parameter index associated with each of the k RS resources is the first index; or when the first field indicates a first configuration parameter, the configuration parameter associated with each of the k RS resources is the first configuration parameter.

In a possible implementation, the first signaling includes a second field, and the second field includes at least k bits. The at least k bits indicate, in a bitmap manner, the configuration parameter associated with each of the k RS resources; or the at least k bits indicate, in a bitmap manner, the configuration parameter index associated with each of the k RS resources.

In a possible implementation, an RS resource ID of an RS resource corresponding to an $i^{th}$ bit in the at least k bits is less than an RS resource ID of an RS resource corresponding to an $(i+1)^{th}$ bit, where i is a positive integer.

In a possible implementation, a plurality of configuration parameters included in first configuration information corresponding to each RS resource indicate a periodicity value and/or a time domain offset value of the RS resource.

According to a ninth aspect, a communication apparatus is provided. The communication apparatus includes a receiving module and a sending module. The receiving module is configured to obtain configuration information, where the configuration information is used to configure a plurality of reference signal RS resource sets, and the plurality of RS resource sets include at least a first resource set and a second resource set. The receiving module is further configured to obtain first signaling, where the first signaling indicates to activate the second resource set, and the first resource set is deactivated when the second resource set is activated. The sending module is configured to send a first RS on an RS resource included in the second resource set.

In a possible implementation, resource types of the first resource set and the second resource set are set to semi-persistent.

In a possible implementation, the sending module is further configured to stop sending a second RS on an RS resource included in the first resource set.

In a possible implementation, the receiving module is specifically configured to obtain the first signaling in a first time unit. The sending module is specifically configured to: stop sending the second RS starting from a time unit after a first time interval elapses in the first time unit; and/or send the first RS starting from a time unit after a second time interval elapses in the first time unit.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

In a possible implementation, the sending module is further configured to report capability information to a network device, where the capability information indicates that a quantity of RS resource sets that are simultaneously in an active state and that are supported by the terminal device is 1, or the capability information indicates that the terminal device supports deactivation of the first resource set when the second resource set is activated.

According to a tenth aspect, a communication apparatus is provided. The communication apparatus includes a sending module and a receiving module. The sending module is configured to send configuration information, where the configuration information is used to configure a plurality of reference signal RS resource sets, and the plurality of RS resource sets include at least a first resource set and a second resource set. The sending module is further configured to send first signaling, where the first signaling indicates to deactivate the first resource set when the second resource set is activated. The receiving module is configured to receive a first RS on an RS resource included in the second resource set.

In a possible implementation, resource types of the first resource set and the second resource set are set to semi-persistent.

In a possible implementation, the receiving module is further configured to stop receiving a second RS on an RS resource included in the first RS resource set.

In a possible implementation, the sending module is further configured to send the first signaling in a first time unit. The receiving module is specifically configured to: stop receiving the second RS starting from a time unit after a first time interval elapses in the first time unit; and/or receive the first RS starting from a time unit after a second time interval elapses in the first time unit.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

In a possible implementation, the receiving module is further configured to receive capability information from a terminal device, where the capability information indicates that a quantity of RS resource sets that are simultaneously in an active state and that are supported by the terminal device is 1, or the capability information indicates that the terminal device supports deactivation of the first resource set when the second resource set is activated.

According to an eleventh aspect, a communication apparatus is provided. The communication apparatus includes a receiving module. The receiving module is configured to obtain configuration information, where the configuration information is used to configure a first reference signal RS resource set and a second resource set. The receiving module is further configured to obtain first signaling, where the first signaling includes first information and second information, the first information indicates to deactivate the first resource set, and the second information indicates whether to activate the second resource set.

In a possible implementation, resource types of the first resource set and the second resource set are set to semi-persistent.

In a possible implementation, the second information includes one bit, and the bit is set to 1 to indicate activation or the bit is set to 0 to indicate deactivation.

In a possible implementation, at least one bit is set to 1 to indicate activation or the bit is set to 0 to indicate deactivation or inactivation.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

According to a twelfth aspect, a communication apparatus is provided. The communication apparatus includes a sending module. The sending module is configured to send configuration information, where the configuration information is used to configure a first reference signal RS resource set and a second resource set. The sending module is further configured to send first signaling, where the first signaling includes first information and second information, the first information indicates to deactivate the first resource set, and the second information indicates whether to activate the second resource set.

In a possible implementation, resource types of the first resource set and the second resource set are set to semi-persistent.

In a possible implementation, the second information includes at least one bit, and the at least one bit indicates, in a bitmap manner, that at least one resource set in a plurality of resource sets is activated or deactivated.

In a possible implementation, the at least one bit is set to 1 to indicate activation or the bit is set to 0 to indicate deactivation or inactivation.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

In a possible implementation, the configuration information further indicates that usage corresponding to the first resource set and usage corresponding to the second resource set are both set to antenna switching.

In a possible implementation, the first resource set and the second resource set are associated with a same antenna configuration.

In a possible implementation, the first resource set and the second resource set correspond to a same spatial relation.

With reference to any one of the possible implementations of the seventh aspect to the tenth aspect, in a possible implementation, the configuration information is carried in radio resource control RRC signaling.

According to a thirteenth aspect, a communication apparatus is provided. The apparatus includes: a receiving module, configured to obtain configuration information, where the configuration information is used to configure N reference signal RS resource sets, and N is an integer greater than 1, where the receiving module is further configured to obtain first signaling, where the first signaling includes a first field; and when the first field is a first value, the first field indicates to activate M RS resource sets in the N RS resource sets; or when the first field is a second value, the first field indicates to deactivate K RS resource sets in the N RS resource sets; and M is a positive integer not greater than N, and K is a positive integer not greater than N; and a processing module, configured to determine an activated resource set and/or a deactivated RS resource set in the N RS resource sets based on the first signaling.

In a possible implementation, the first field indicates to activate the M RS resource sets in the N RS resource sets, and the remaining N-M RS resource sets in the N RS resource sets other than the M RS resource sets are inactive resource sets.

In a possible implementation, the first field indicates to activate the M RS resource sets in the N RS resource sets, the first signaling further includes an RS resource set identity field, and the RS resource set identity field indicates the M RS resource sets.

In a possible implementation, the first field indicates to deactivate the K RS resource sets in the N RS resource sets, the first signaling does not include an RS resource set identity field or the first signaling further includes an RS resource set identity field, and one or more bits in the RS resource set identity field are reserved bits.

In a possible implementation, N=2, and M=1; and/or K=N.

In a possible implementation, a terminal device reports capability information to a network device, where the capability information indicates whether the terminal device supports determining the activated resource set and/or the deactivated RS resource set in the N RS resource sets based on the first signaling.

According to a fourteenth aspect, a communication apparatus is provided. The apparatus includes: a sending module, configured to send configuration information, where the configuration information is used to configure N reference signal RS resource sets, and N is an integer greater than 1. The sending module is further configured to send first signaling, where the first signaling includes a first field; and when the first field is a first value, the first field indicates to activate M RS resource sets in the N RS resource sets; or when the first field is a second value, the first field indicates to deactivate K RS resource sets in the N RS resource sets; and M is a positive integer not greater than N, and K is a positive integer not greater than N.

In a possible implementation, the first field indicates to activate the M RS resource sets in the N RS resource sets, and the remaining N-M RS resource sets in the N RS resource sets other than the M RS resource sets are inactive resource sets.

In a possible implementation, the first field indicates to activate the M RS resource sets in the N RS resource sets, the first signaling further includes an RS resource set identity field, and the RS resource set identity field indicates the M RS resource sets.

In a possible implementation, the first field indicates to deactivate the K RS resource sets in the N RS resource sets, the first signaling does not include an RS resource set identity field or the first signaling further includes an RS resource set identity field, and one or more bits in the RS resource set identity field are reserved bits.

In a possible implementation, N=2, and M=1; and/or K=N.

In a possible implementation, capability information reported by a terminal device is received, where the capability information indicates whether the terminal device supports determining an activated resource set and/or a deactivated RS resource set in the N RS resource sets based on the first signaling.

According to a fifteenth aspect, a communication apparatus is provided. The communication apparatus includes a receiving module and a sending module. The receiving module is configured to obtain resource set configuration information, where the resource set configuration information includes M pieces of first configuration information, k pieces of first configuration information exist in the M pieces of first configuration information, the k pieces of first configuration information correspond to k reference signal RS resources, and each of the k pieces of first configuration information includes a plurality of configuration parameters; M-k pieces of first configuration information exist in the M pieces of first configuration information, the M-k pieces of first configuration information correspond to M-k RS resources, and each of the M-k pieces of first configuration information includes one configuration parameter; and a configuration parameter associated with each of the M-k RS resources is a configuration parameter included in first configuration information corresponding to the RS resource. The receiving module is further configured to: obtain first signaling; and determine, based on the first signaling, a configuration parameter associated with each of the k RS resources, or determine, based on the first signaling, an index of a configuration parameter associated with each of the k RS resources. The sending module is configured to send an RS on M RS resources based on a configuration parameter associated with each of the M RS resources, where k is an integer greater than 0 and less than or equal to M, and M is a positive integer.

In a possible implementation, the first signaling includes a first field. When the first field indicates a first index, the configuration parameter index associated with each of the k RS resources is the first index; or when the first field indicates a first configuration parameter, the configuration parameter associated with each of the k RS resources is the first configuration parameter.

In a possible implementation, the first signaling includes a second field, and the second field includes at least k bits. The at least k bits indicate, in a bitmap manner, the configuration parameter associated with each of the k RS resources; or the at least k bits indicate, in a bitmap manner, the configuration parameter index associated with each of the k RS resources, where k is an integer greater than or equal to 1.

In a possible implementation, an RS resource ID of an RS resource corresponding to an $i$th bit in the at least k bits is less than an RS resource ID of an RS resource corresponding to an $(i+1)$th bit, where i is a positive integer.

In a possible implementation, a plurality of configuration parameters included in first configuration information corresponding to each RS resource indicate a periodicity value and/or a time domain offset value of the RS resource.

According to a sixteenth aspect, a communication apparatus is provided. The communication apparatus includes a sending module and a receiving module. The sending module is configured to send resource set configuration information, where the resource set configuration information includes M pieces of first configuration information, k pieces of first configuration information exist in the M pieces of first configuration information, the k pieces of first configuration information correspond to k reference signal RS resources, and each of the k pieces of first configuration information includes a plurality of configuration parameters; M-k pieces of first configuration information exist in the M pieces of first configuration information, the M-k pieces of first configuration information correspond to M-k RS resources, and each of the M-k pieces of first configuration information includes one configuration parameter; and a configuration parameter associated with each of the M-k RS resources is a configuration parameter included in first configuration information corresponding to the RS resource. The sending module is further configured to send first signaling, where the first signaling indicates a configuration parameter associated with each of the k RS resources or an index of a configuration parameter. The receiving module is configured to receive an RS on M RS resources, where k is an integer greater than 0 and less than or equal to M, and M is a positive integer.

In a possible implementation, the first signaling includes a first field. When the first field indicates a first index, the configuration parameter index associated with each of the k RS resources is the first index; or when the first field indicates a first configuration parameter, the configuration parameter associated with each of the k RS resources is the first configuration parameter.

In a possible implementation, the first signaling includes a second field, and the second field includes at least k bits. The at least k bits indicate, in a bitmap manner, the configuration parameter associated with each of the k RS resources; or the at least k bits indicate, in a bitmap manner, the configuration parameter index associated with each of the k RS resources.

In a possible implementation, an RS resource ID of an RS resource corresponding to an $i^{th}$ bit in the at least k bits is less than an RS resource ID of an RS resource corresponding to an $(i+1)^{th}$ bit, where i is a positive integer.

In a possible implementation, a plurality of configuration parameters included in first configuration information corresponding to each RS resource indicate a periodicity value and/or a time domain offset value of the RS resource.

According to a seventeenth aspect, a communication apparatus is provided. The communication apparatus includes a processor and a communication interface. The communication interface is configured to communicate with a module other than the communication apparatus, and the processor is configured to run computer programs or instructions, to implement the method according to any one of the first aspect.

According to an eighteenth aspect, a communication apparatus is provided. The communication apparatus includes a processor and a communication interface. The communication interface is configured to communicate with a module other than the communication apparatus, and the processor is configured to run computer programs or instructions, to implement the method according to any one of the second aspect.

According to a nineteenth aspect, a communication apparatus is provided. The communication apparatus includes a processor and a communication interface. The communication interface is configured to communicate with a module other than the communication apparatus, and the processor is configured to run computer programs or instructions, to implement the method according to any one of the third aspect.

According to a twentieth aspect, a communication apparatus is provided. The communication apparatus includes a processor and a communication interface. The communication interface is configured to communicate with a module other than the communication apparatus, and the processor is configured to run computer programs or instructions, to implement the method according to any one of the fourth aspect.

According to a twenty-first aspect, a communication apparatus is provided. The communication apparatus includes a processor and a communication interface. The communication interface is configured to communicate with a module other than the communication apparatus, and the processor is configured to run computer programs or instructions, to implement the method according to any one of the fifth aspect.

According to a twenty-second aspect, a communication apparatus is provided. The communication apparatus includes a processor and a communication interface. The communication interface is configured to communicate with a module other than the communication apparatus, and the processor is configured to run computer programs or instructions, to implement the method according to any one of the sixth aspect.

According to a twenty-third aspect, a communication apparatus is provided. The communication apparatus includes a processor and a communication interface. The communication interface is configured to communicate with a module other than the communication apparatus, and the processor is configured to run computer programs or instructions, to implement the method according to any one of the seventh aspect.

According to a twenty-fourth aspect, a communication apparatus is provided. The communication apparatus includes a processor and a communication interface. The communication interface is configured to communicate with a module other than the communication apparatus, and the processor is configured to run computer programs or instructions, to implement the method according to any one of the eighth aspect.

According to a twenty-fifth aspect, a computer-readable storage medium is provided. The computer-readable storage medium includes computer program instructions. When the computer program instructions are run on a communication apparatus, the communication apparatus is enabled to perform the method according to any one of the first aspect.

According to a twenty-sixth aspect, a computer-readable storage medium is provided. The computer-readable storage medium includes computer program instructions. When the computer program instructions are run on a communication apparatus, the communication apparatus is enabled to perform the method according to any one of the second aspect.

According to a twenty-seventh aspect, a computer-readable storage medium is provided. The computer-readable storage medium includes computer program instructions. When the computer program instructions are run on a communication apparatus, the communication apparatus is enabled to perform the method according to any one of the third aspect.

According to a twenty-eighth aspect, a computer-readable storage medium is provided. The computer-readable storage medium includes computer program instructions. When the computer program instructions are run on a communication apparatus, the communication apparatus is enabled to perform the method according to any one of the fourth aspect.

According to a twenty-ninth aspect, a computer-readable storage medium is provided. The computer-readable storage medium includes computer program instructions. When the computer program instructions are run on a communication apparatus, the communication apparatus is enabled to perform the method according to any one of the fifth aspect.

According to a thirtieth aspect, a computer-readable storage medium is provided. The computer-readable storage medium includes computer program instructions. When the computer program instructions are run on a communication apparatus, the communication apparatus is enabled to perform the method according to any one of the sixth aspect.

According to a thirty-first aspect, a computer-readable storage medium is provided. The computer-readable storage medium includes computer program instructions. When the computer program instructions are run on a communication apparatus, the communication apparatus is enabled to perform the method according to any one of the seventh aspect.

According to a thirty-second aspect, a computer-readable storage medium is provided. The computer-readable storage medium includes computer program instructions. When the computer program instructions are run on a communication apparatus, the communication apparatus is enabled to perform the method according to any one of the eighth aspect.

According to a thirty-third aspect, a computer program product is provided. When the computer program product runs on a communication apparatus, the communication apparatus is enabled to perform the method according to any one of the first aspect.

According to a thirty-fourth aspect, a computer program product is provided. When the computer program product runs on a communication apparatus, the communication apparatus is enabled to perform the method according to any one of the second aspect.

According to a thirty-fifth aspect, a computer program product is provided. When the computer program product runs on a communication apparatus, the communication apparatus is enabled to perform the method according to any one of the third aspect.

According to a thirty-sixth aspect, a computer program product is provided. When the computer program product runs on a communication apparatus, the communication apparatus is enabled to perform the method according to any one of the fourth aspect.

According to a thirty-seventh aspect, a computer program product is provided. When the computer program product runs on a communication apparatus, the communication apparatus is enabled to perform the method according to any one of the fifth aspect.

According to a thirty-eighth aspect, a computer program product is provided. When the computer program product runs on a communication apparatus, the communication apparatus is enabled to perform the method according to any one of the sixth aspect.

According to a thirty-ninth aspect, a computer program product is provided. When the computer program product runs on a communication apparatus, the communication apparatus is enabled to perform the method according to any one of the seventh aspect.

According to a fortieth aspect, a computer program product is provided. When the computer program product runs on a communication apparatus, the communication apparatus is enabled to perform the method according to any one of the eighth aspect.

According to a forty-first aspect, a communication system is provided. The communication system includes the communication apparatus according to the ninth aspect and the communication apparatus according to the tenth aspect of the claims.

According to a forty-second aspect, a communication system is provided. The communication system includes the communication apparatus according to the eleventh aspect and the communication apparatus according to the twelfth aspect of claims.

According to a forty-third aspect, a communication system is provided. The communication system includes the communication apparatus according to the thirteenth aspect and the communication apparatus according to the fourteenth aspect of claims.

According to a forty-fourth aspect, a communication system is provided. The communication system includes the communication apparatus according to the fifteenth aspect and the communication apparatus according to the sixteenth aspect of claims.

It may be understood that any one of the communication apparatus, the computer-readable storage medium, the computer program product, and the communication system that are provided above may be implemented by using the corresponding method provided above. Therefore, for beneficial effect that can be achieved by the communication apparatus, the computer-readable storage medium, the computer program product, and the communication system, refer to the beneficial effect in the corresponding methods provided above. Details are not described herein again.

BRIEF DESCRIPTION OF DRAWINGS

FIG. 1 is a diagram of a system architecture of a communication system according to an embodiment of this application;

FIG. 2 is a schematic diagram of SRS resource set configuration and switching according to an embodiment of this application;

FIG. 3 is a schematic diagram of another SRS resource set configuration and switching according to an embodiment of this application;

FIG. 4a is a schematic diagram of a format of MAC CE signaling according to an embodiment of this application;

FIG. 4b is a schematic diagram of another format of MAC CE signaling according to an embodiment of this application;

FIG. 5 is a schematic diagram of a structure of a communication apparatus according to an embodiment of this application;

FIG. 6a, FIG. 6b, and FIG. 7 to FIG. 9 are schematic flowcharts of communication methods according to embodiments of this application; and

FIG. 10 is a schematic diagram of a structure of a communication apparatus according to an embodiment of this application.

DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments, unless otherwise specified, "a plurality of" means two or more.

It should be noted that, in this application, terms such as "example" or "for example" are used to represent an example, an instance, or an illustration. Any embodiment or design scheme described as an "example" or "for example" in this application should not be explained as being more preferred or having more advantages than another embodiment or design scheme. To be precise, the terms such as "example" or "for example" are intended to present a related concept in a specific manner.

The following clearly and completely describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, technologies in embodiments of this application are briefly described.

A reference signal RS may include but is not limited to an uplink reference signal and a downlink reference signal. The uplink reference signal may include a demodulation reference signal (demodulation reference signal, DMRS), an SRS, and the like. The downlink reference signal may include a cell reference signal (cell reference signal, CRS), and the like. An RS resource set may be configured for a transmit end of the RS, the RS resource set may include at least one RS resource, and the transmit end may send the RS on an RS resource included in an activated RS resource set.

In embodiments of this application, an uplink reference signal SRS in fifth generation (5th generation, 5G) mobile communication technology new radio (New Radio, NR) is used as an example for specific description.

The SRS is sent by a terminal device to a network device. The network device may estimate channel quality based on the SRS, that is, the SRS may be used for uplink channel measurement. The network device may configure one or more SRS resource sets for the terminal device by using an SRS resource set (SRS resourceset) in higher layer configuration information, and configure a resource set identity (Identity, ID) for each SRS resource set by using an SRS-ResourceSetId in the higher layer configuration information. K SRS resources may be configured for each resource set, where a maximum value of K is related to a capability of the terminal device. The terminal device may send the SRS on an SRS resource included in an activated SRS resource set.

The SRS may be used for uplink channel measurement in different application scenarios. Correspondingly, the SRS resource set may be configured for different purposes. A purpose of each SRS resource set on the terminal device may be configured by the network device by using usage (usage) of an SRS-resourceset in the higher layer configuration information. For example, the SRS resource set may be used for uplink channel measurement in codebook (codebook, CB)-based uplink transmission, and usage in higher layer configuration information is configured as codebook. Alternatively, the SRS resource set may be used for uplink channel measurement in noncodebook (noncodebook, NCB)-based uplink transmission, and usage is configured as noncodebook. Alternatively, the SRS resource set may be used for uplink channel measurement in beam management (beam management, BM), and usage is configured as beammanagement. Alternatively, the SRS resource set may be used for uplink channel measurement in antenna switching (antennaswitching, AS), and usage is configured as antenna switching. Alternatively, the SRS resource set may be used for uplink channel measurement in positioning. An NR slot format includes a downlink symbol (symbol), an uplink symbol, and a flexible symbol. The SRS can be sent only on the uplink symbol or the flexible symbol. The network device may configure continuous orthogonal frequency division multiplexing (orthogonal frequency division multiplexing, OFDM) symbols, a location of a start symbol occupied by the SRS resource in a triggered slot, and a repetition factor of each SRS resource through resource mapping (resourcemapping) in the higher layer configuration information.

The SRS may include a periodic SRS (periodic SRS, P SRS), a semi-persistent SRS (semi-persistent SRS, SP SRS), an aperiodic SRS (aperiodic SRS, AP SRS), and the like. The network device may configure, by using a resource type (resourcetype) in the higher layer configuration information, time domain behavior of the SRS resource set to periodic, semi-persistent, or aperiodic. Correspondingly, time domain behavior of all SRS resources included in the SRS resource set are periodic, semi-persistent, or aperiodic. Correspondingly, the SRS resource is classified into the P SRS, the SP SRS, or the AP SRS based on different time domain behavior. For the P SRS, a periodicity and a time domain offset may be configured for each SRS resource, for example, a slot-level periodicity and a slot-level offset may be configured for each SRS resource. The terminal device may cyclically send the SRS based on the configured time domain offset and the configured period. For the SP SRS, a periodicity and a time domain offset may also be configured for each SRS resource, and an activation command or a deactivation command may be sent based on MAC CE signaling. When the SP SRS is activated, the terminal device may cyclically send the SRS based on the configured periodicity and the configured time domain offset, and stop sending the SRS when receiving the deactivation command.

All the foregoing SRS resourceset, SRS-ResourceSetId, usage, resourcetype may be understood as being included in one information element (information element, IE).

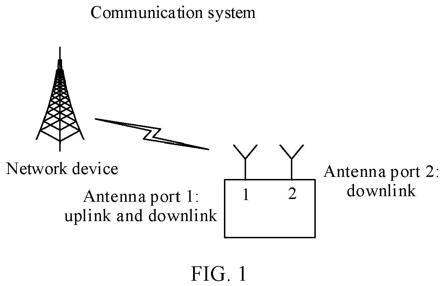

For a time division duplexing (Time Division Duplexing, TDD) system, the network device may obtain a downlink channel parameter based on the SRS and channel reciprocity. It should be noted that the network device needs to detect all antennas of the terminal device to obtain channel parameters of all channels. In general, the terminal device may be configured to support a higher data rate in a downlink than in an uplink. For example, the terminal device may be configured with one transmit link and two receive links to support different data rates. In addition, uplink and downlink antenna capabilities of the terminal device are different, and a quantity of uplink antennas is usually less than or equal to a quantity of downlink antennas, as shown in FIG. 1. Herein, the uplink and downlink antenna capabilities refer to a capability of simultaneous sending (uplink) or receiving (downlink). As shown in FIG. 1, a quantity of antennas of the terminal device is 2, where the quantity of uplink antennas is 1, corresponding to an antenna port 1; and the quantity of downlink antennas is 2, corresponding to the antenna port 1 and an antenna port 2. Therefore, only a part of channel information can be obtained by using only one transmit (uplink) antenna of the terminal device.

It can be learned that, to obtain all the characteristics for channel, SRS transmission needs to be performed at a moment by using some uplink antennas within an uplink capability range of the terminal device, to detect some uplink antennas, and SRS transmission needs to be performed at a next moment by using other uplink antennas, to detect the other uplink antennas, until the terminal device completes detection of all the antennas within a time period. Therefore, a usage type of antenna switching (antenna switching) may be configured. For example, when the usage type in the higher layer configuration information configured by the network device for the terminal device is antennaSwitching, the terminal device may send an SRS from the antenna port 1 during a first SRS transmission opportunity, and send an SRS from the antenna port 2 during a second SRS transmission opportunity. In this way, uplink channel information corresponding to the antenna port 1 and uplink channel information corresponding to the antenna port 2 are separately obtained, and all the characteristics for downlink channel are obtained through channel reciprocity.

It should be noted together that, in embodiments of this application, the higher layer configuration information may be carried in radio resource control (radio resource control, RRC), a MAC CE, or the like. In other words, in embodiments of this application, higher layer signaling or the higher layer configuration information may be RRC, a MAC CE, or the like. A higher layer parameter is configured by using the higher layer signaling. For example, the higher layer parameter is indicated by the RRC, or the higher layer parameter is configured by using the RRC.

In embodiments of this application, that a quantity of SRS resources is configured for each SRS resource set may be referred to as an antenna configuration corresponding to the resource set. For example, a terminal device sends data (uplink) to a network device through one antenna. If there are two antennas used by the terminal device to receive data (downlink) from the network device, in embodiments of this application, it may be identified that uplink and downlink antenna capabilities of the terminal device are 1T2R.

The network device may perform antenna configuration and configure a corresponding SRS resource set for the terminal device based on the uplink and downlink antenna capabilities reported by the terminal device. When the usage type is configured as antenna switching (antenna switching), the network device configures, for the terminal device, all SRS ports that have a same quantity of SRS resource configurations in one SRS resource set. For UE with 1T2R, 1T4R, or 2T4R, the UE does not expect to be configured or trigger more than one SRS resource set whose usage type is configured as antenna switching (antenna switching) in a same slot. For UE with 1T=1R, 2T=2R, or 4T=4R, the UE does not expect to be configured or trigger more than one SRS resource set whose usage type is configured as antenna switching (antenna switching) in a same symbol.

For example, specific configurations may be shown as follows:

1. For UE with 1T2R, the network device configures a maximum of two SRS resource sets, and resource types (resourceType) of the two SRS resource sets are different. Two SRS resources are configured for each resource set, and the two resources correspond to different symbols. Each SRS resource in a resource set includes an independent SRS port, and a UE antenna port associated with an SRS port of a second resource in the resource set is different from a UE antenna port associated with an SRS port of a first resource.

It should be specially noted herein that resource Type is used to configure time domain behavior of a resource set, for example, a periodic, semi-persistent, or aperiodic resource set. That resource types (resourceType) of the two SRS resource sets are different means: The network device may configure one P SRS resource set and one AP SRS resource set, or may configure one SP SRS resource set and one AP SRS resource set. However, one P SRS resource set and one SP SRS resource set are not allowed to be configured. In other words, for one UE, only one of the P SRS resource set and the SP SRS resource set can be configured by using RRC at a time.

2. For UE with 2T4R, a maximum of two SRS resource sets with different resource types (resourceType) are configured. Each resource set is configured with two SRS resources, and the two resources correspond to different symbols. Each SRS resource in a resource set includes two SRS ports, and a UE antenna port pair associated with an SRS port pair of a second resource in the resource set is different from a UE antenna port pair associated with an SRS port pair of a first resource.

3. For UE with 1 T4R, zero or one SRS resource set whose resource type (resourceType) is set to "periodic" or "semi-persistent" may be configured. Each resource set is configured with four SRS resources, and each resource corresponds to a different symbol. Each SRS resource in a resource set includes an independent SRS port, and SRS ports of all the resources are associated with different UE antenna ports.

4. For UE with 1T4R, zero or two SRS resource sets whose resource types (resourceType) are set to "aperiodic" may alternatively be configured. A total of four SRS resources are configured for the two resource sets, and the four resources correspond to different symbols in two different slots. SRS ports of all the resources in the two resource sets are associated with different UE antenna ports. Two SRS resources may be configured for each of two resource sets; or one SRS resource may be configured for one resource set and three SRS resources may be configured for the other resource set. Values of trigger parameters aperiodicSRS-ResourceTrigger or AperiodicSRS-ResourceTriggerList of the two resource sets may be the same, and slot offset parameters slotOffset may be different.

5. For the UE with 1T=1R, 2T=2R, or 4T=4R, a maximum of two SRS resource sets are configured. Each resource set includes one resource, and a quantity of SRS ports of each resource is 1, 2, or 4.

Currently, in actual scheduling, because data traffic and a size of a data packet usually change rapidly, for different data traffic scenarios, a transmission periodicity of an SRS needs to change quickly and accordingly. For example, when mobility of a user is low and the data packet is small, a long-periodicity SRS resource may be configured. However, when the mobility of the user increases or a service with a large data packet arrives, a short-periodicity SRS resource needs to be configured, to improve channel measurement accuracy.

Therefore, the network device may configure at least two SRS resource sets for the terminal device. One of the at least two SRS resource sets is a P SRS resource set with a long period, the other is an SP SRS resource set with a short period, and the resource sets are both used for antenna switching.

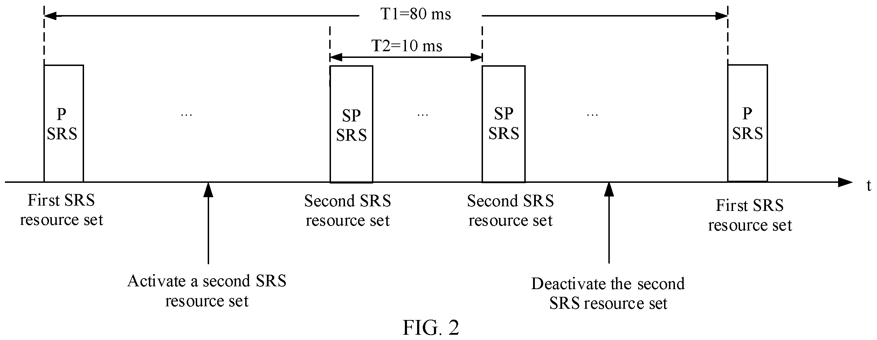

For example, as shown in FIG. 2, a long-periodicity P SRS resource set with a periodicity of 80 ms and a short-periodicity SP SRS resource set with a periodicity of 10 ms are configured for the terminal device. When a data packet of the terminal device is small, a P SRS is used. When a service of a large data packet arrives, the network device sends a MAC CE to activate an SP SRS. When the terminal device recovers to a state in which a data packet is small, the network device sends a MAC CE to deactivate the SP SRS and use the P SRS. Therefore, an overall SRS sending periodicity is adjusted by activating or deactivating the SP SRS resource set.

However, when a quantity of available SP SRS resource sets is less than a quantity of terminal devices, overlapping SP SRSs may be allocated to a plurality of terminal devices. To avoid a case in which SRS resource collision between users is caused when the plurality of terminal devices need to simultaneously activate SP SRSs, at least one P SRS resource set and two SP SRS resource sets may be simultaneously configured for a same terminal device, and the resource sets are all used for antenna switching. A periodicity and/or an offset corresponding to an SRS resource included in an SP SRS resource set is different from a periodicity and/or an offset corresponding to an SRS resource included in another SP SRS resource set.

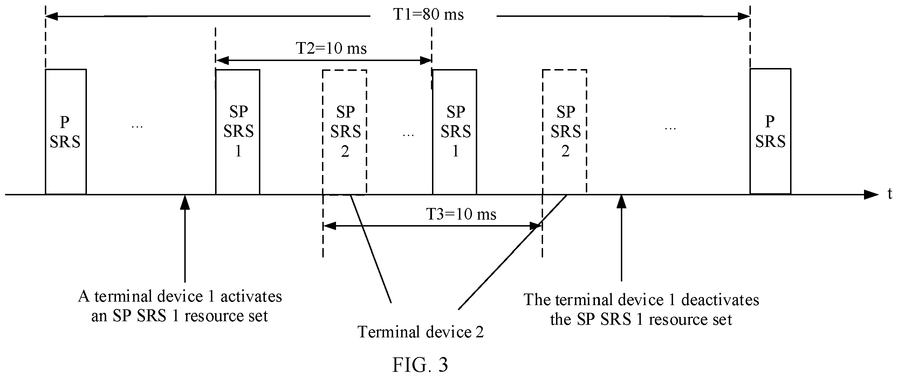

As shown in FIG. 3, the network device configures a long-periodicity P SRS resource set with a periodicity of 80 ms and two short-periodicity SP SRS resource sets for the terminal device, where an SP SRS 1 and an SP SRS 2 have periods of 10 ms. When a data packet of a terminal device 1 is small, a P SRS is used. When a large data packet of the terminal device 1 arrives, a terminal device 2 sends an SRS on the configured SP SRS 2, and the network device may activate, for the terminal device 1, the SP SRS 1 that does not collide with the terminal device 2. Therefore, a plurality of sets of SP SRSs are configured for each terminal device, and resources for sending SRSs by different terminal devices are scheduled by activating or deactivating the SP SRSs, so that a probability of SRS collision between users can be effectively reduced.

To indicate, to UE, spatial information used when an SRS is sent, a base station configures a spatial relation (spatial relation), that is, a reference RS, for each SRS resource. It may be understood that the UE sends the SRS by using a same beam as the reference RS, that is, spatial domain transmission filtering used by a target SRS is the same as that used by the reference RS. A higher layer parameter spatialRelationInfo or spatialRelationInfoPos (if spatialRelationInfo or spatialRelationInfoPos is configured) includes an ID of the reference RS.

When a higher layer parameter resourceType included in an SRS resource set is set to 'semi-persistent', all SRS resources included in the resource set are semi-persistent. Specifically, if the higher layer parameter spatialRelationInfo configured for the UE includes an ID of a reference signal 'ssb-Index', 'ssb-IndexServing', or 'ssb-IndexNcell', the UE sends the target SRS by using a spatial domain transmission filter same as a spatial domain transmission filter for receiving a configured SSB.

If the higher layer parameter spatialRelationInfo configured for the UE includes an ID of a reference signal 'csi-RS-Index' or 'csi-RS-IndexServing', the UE sends the target SRS by using a spatial domain transmission filter same as a spatial domain transmission filter for receiving a configured periodic CSI-RS or semi-persistent CSI-RS. It should be noted herein that, when a reference RS of the periodic SRS is a CSI-RS, the CSI-RS can only be periodic or semi-persistent.

If the higher layer parameter spatialRelationInfo configured for the UE includes an ID of a reference signal 'srs' or 'srs-spatialRelation', the UE sends the target SRS by using a spatial domain transmission filter same as a spatial domain transmission filter for sending a configured periodic SRS. It should be noted herein that when a reference RS of the periodic SRS is an SRS, the reference SRS can only be periodic.

The following describes two formats of MAC CE signaling that may be used to activate or deactivate an SP SRS resource set.

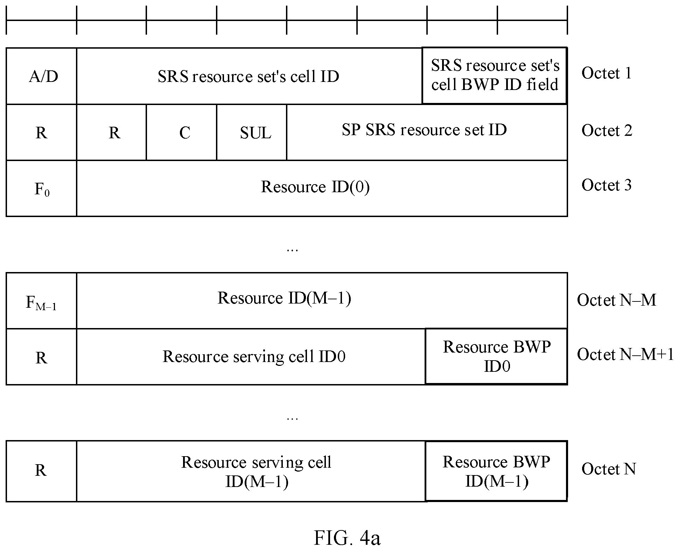

First MAC CE signaling is an SP SRS activation/deactivation MAC CE (SP SRS Activation/Deactivation MAC CE). The SP SRS activation/deactivation MAC CE may specially indicate activation or deactivation of a semi-persistent SRS resource set, and may further indicate a spatial relation of the semi-persistent SRS resource set. A format of the SP SRS activation/deactivation MAC CE signaling is shown in FIG. 4a. The following describes meanings indicated by fields in the MAC CE.

1. SP SRS resource set ID field (SP SRS Resource Set ID field) indicates an ID of an activated or deactivated SP SRS resource set, and the ID of the resource set is configured by using an SRS-ResourceSetId in a configuration parameter. A length of the SP SRS resource set ID field is 4 bits, and a value of the SP SRS resource set ID field ranges from 1 to 15.

2. An A/D field indicates whether the SP SRS resource set indicated by the SP SRS resource set ID field is activated or deactivated. When a length of the A/D field is 1 bit, it indicates activation when the A/D field is set to 1, or it indicates deactivation when the A/D field is set to 0.

3. SRS resource set's cell ID field (SRS Resource Set's Cell ID field) indicates an ID of a serving cell in which the SP SRS resource set to be activated/deactivated is located.

When a C field is set to 0, the SRS resource set's cell ID field indicates the ID of the serving cell, the serving cell includes all resources indicated by a resource IDi field, and a field length is 5 bits.

4. An SRS resource set's cell BWP ID field (SRS Resource Set's BWP ID field) indicates an uplink bandwidth part (Bandwidth Part, BWP) in which the SP SRS resource set to be activated/deactivated is located.

When the C field is set to 0, the SRS resource set's BWP ID field indicates an ID of the BWP, the BWP includes all the resources indicated by the resource IDi field, and a field length is 2 bits.

5. An SUL field indicates whether the MAC CE is applied to a normal uplink (Normal Uplink, NUL) carrier configuration or a supplementary uplink (Supplementary Uplink, SUL) carrier configuration. A length of the SUL field is 1 bit. It indicates that the MAC CE is applied to the SUL carrier configuration when the SUL field is set to 1, or it indicates that the MAC CE is applied to the NUL carrier configuration when the SUL field is set to 0.

6. An R field indicates a reserved bit, and is set to 0 by default.

7. An Fi field indicates a type of a reference signal resource, where the reference signal resource indicates a spatial relation of an SRS resource, and the SRS resource is included in the SP SRS resource set indicated by the SP SRS resource set ID field. F0 is associated with a first resource in the SRS resource set, F1 is associated with a second resource in the SRS resource set, and the rest may be deduced by analogy. A length of the Fi field is 1 bit. If this field is set to 1, it indicates that a non-zero power channel state information reference signal (Non-Zero-Power Channel State Information Reference Signal, NZP CSI-RS) resource index is used as a reference signal; or if this field is set to 0, it indicates that a synchronization signal block (Synchronization Signal Block, SSB) index or an SRS resource index is used as a reference signal. It should be noted that the Fi field exists only when the MAC CE indicates activation.

8. The C field indicates whether a Resource Serving Cell ID field and a Resource BWP ID field are present. A length of the C field is 1 bit. When the C field is set to 1, both the Resource Serving Cell ID field and the Resource BWP ID field exist. Otherwise, neither the Resource Serving Cell ID field nor the Resource BWP ID field exists.

9. A resource serving cell IDi field (Resource Serving Cell IDi field) indicates an ID of a serving cell in which a reference signal resource of an SRS resource i is located, and a length of the field is 5 bits.

10. A resource BWP IDi field (Resource BWP IDi field) indicates an ID of a BWP of the reference signal resource of the SRS resource i, and a length of the field is 2 bits.

11. A resource IDi field (Resource IDi) indicates an ID of the reference signal resource of the SRS resource i. When an SRS is activated, it indicates an ID of a specific RS when F_i=0. A resource ID0 is associated with the first resource in the SRS resource set, a resource ID1 is associated with the second resource in the SRS resource set, and the rest may be deduced by analogy. A length of the Resource IDi field is 7 bits. The Resource IDi field exists only when the MAC CE indicates activation of the resource set.

In addition, a first bit of the Resource IDi field is a flag. When Fi is set to 0, the first bit of the field is set to 1, indicating that a remaining bit of the field includes an SSB index ID, that is, SSB-Index. When Fi is set to 0, the first bit of the field is set to 0, indicating that the remaining bit of the field includes an SRS ID SRS-ResourceId.

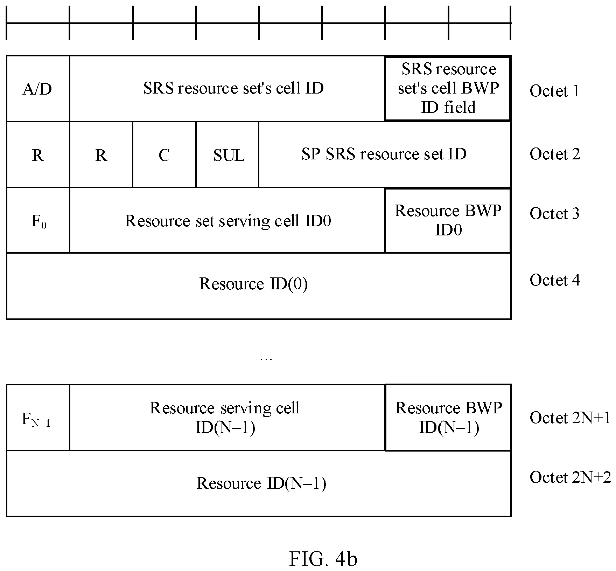

Second MAC CE signaling is an enhanced SP/AP SRS spatial relation indication MAC CE (Enhanced SP/AP SRS Spatial Relation Indication MAC CE). The enhanced SP/AP SRS spatial relation indication MAC CE may indicate a spatial relation of a semi-persistent SRS resource set or an aperiodic SRS resource set, and may further indicate activation or deactivation of the semi-persistent SRS resource set. A signaling format may be shown in FIG. 4b.

Meanings of some fields included in the enhanced SP/AP SRS spatial relation indication MAC CE are similar to specific meanings of fields in the SP SRS activation/deactivation MAC CE. Refer to the foregoing meanings of the fields, and details are not described again. With reference to FIG. 4b, the following describes fields whose meanings in the enhanced SP/AP SRS spatial relation indication MAC CE are different from those in the SP SRS activation/deactivation MAC CE.

1. A/D field: As described above, an A/D field may indicate whether the SP SRS resource set indicated by the SP SRS resource set ID field is activated or deactivated. When a length of the A/D field is 1 bit, it indicates activation when the A/D field is set to 1, or it indicates deactivation when the A/D field is set to 0.

It should be noted that, when an indicated SRS resource set ID is an aperiodic SRS resource set, a MAC entity ignores the A/D field.

2. SP SRS resource set ID field (SP SRS Resource Set ID field) indicates an ID of an SP/AP SRS resource set, and the ID of the resource set is configured by using a higher layer parameter SRS-ResourceSetId. A length of the SP SRS resource set ID field is 4 bits, and a value of the SP SRS resource set ID field ranges from 1 to 15.

3. A resource IDi field (Resource IDi field) indicates an ID of a reference signal resource of an SRS resource i. When an SRS is activated, it indicates an ID of a specific RS when F_i=0. A resource ID0 is associated with a first resource in the SRS resource set, a resource ID 1 is associated with a second resource in the SRS resource set, and the rest may be deduced by analogy. A length of the field is 8 bits. The field exists only when the MAC CE indicates activation of the SP SRS resource set or the AP SRS resource set.

A first bit of the field is a flag. When Fi is set to 0, the first bit of the field is always set to 0. When Fi is set to 0, a second bit of the field is set to 1, indicating that a remaining bit of the field includes an SSB ID SSB-Index. When Fi is set to 0, the second bit of the field is set to 0, indicating that the remaining bit of the field includes an SRS ID SRS-ResourceId.

Generally, the network device needs to send indication information to the terminal device, to indicate to activate or deactivate a reference signal resource set, thereby implementing switching between a plurality of reference signal resource sets.

Embodiments of this application provide a communication method, to effectively reduce signaling overheads caused by switching between RS resource sets, and improve transmission efficiency.

The following describes the technical solutions in embodiments of this application with reference to the accompanying drawings in embodiments of this application. A network architecture and an application scenario described in the following embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

First, a system architecture or a scenario to which embodiments of this application are applied is described. The solutions in embodiments of this application are applicable to a protocol framework such as 4G long term evolution (long term evolution, LTE) or 5G NR, and may be applied to a plurality of wireless communication scenarios. A wireless communication system includes communication devices, and the communication devices may perform wireless communication over an air interface resource. The communication device may include a network device and a terminal device, and the air interface resource may include at least one of a time domain resource, a frequency domain resource, a code resource, and a space resource. A wireless communication scenario to which embodiments of this application are applied may include various scenarios in which the network device communicates with the terminal device.

For example, the network device may be a base station, and the terminal device may be a user terminal (user equipment, UE). The wireless communication scenario to which embodiments of this application are applied may be a scenario of point-to-point transmission between a base station and UE shown in FIG. 1, a scenario of multi-hop relay (relay) transmission between a base station and UE, a scenario of dual connectivity (dual connectivity, DC) between two base stations and UE, a scenario of a multi-hop multi-connection between a base station and UE, or the like. It should be understood that FIG. 1 is merely an example, and does not limit the network architecture to which this application is applicable. In addition, uplink transmission, downlink transmission, access link transmission, backhaul (backhaul) link transmission, sidelink (sidelink) transmission, and the like are not limited in the solutions in embodiment of this application.

In embodiments of this application, the terminal device may be a device having a wireless transceiver function. The terminal device may be deployed on the land, for example, the terminal device is an indoor device, an outdoor device, a handheld device, or a vehicle-mounted device; or the terminal device may be deployed on the water (for example, on a ship); or the terminal device may be deployed in the air (for example, on a plane, a balloon, or a satellite). The terminal device may be UE, an access terminal, a terminal unit, a subscriber unit (subscriber unit), a terminal station, a mobile station (Mobile Station, MS), a remote station, a remote terminal, a mobile device, a wireless communication device, a terminal agent, a terminal apparatus, or the like in a 5G network or a future evolved public land mobile network (public land mobile network, PLMN). The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

In embodiments of this application, the network device may be a communication apparatus deployed in a radio access network to provide a wireless communication function for the terminal device. The network device may include macro base stations, micro base stations (also referred to as small cells), relay stations, and access points in various forms. In systems that use different radio access technologies, names of the network device may vary, such as a BTS (Base Transceiver Station, base transceiver station) in a GSM (Global System for Mobile Communications, global system for mobile communications) or a CDMA (Code Division Multiple Access, code division multiple access) network, an NB (NodeB) in WCDMA (Wideband Code Division Multiple Access, wideband code division multiple access), and an eNB or eNodeB (Evolutional NodeB) in LTE (Long Term Evolution, long term evolution). Alternatively, the network device may be a radio controller in a CRAN (Cloud Radio Access Network, cloud radio access network) scenario. Alternatively, the network device may be a base station device in the future 5G network or a network device in the future evolved PLMN network. Alternatively, the network device may be a wearable device or a vehicle-mounted device. Alternatively, the network device may be a transmission reception point (Transmission and Reception Point, TRP). In embodiments of this application, an apparatus configured to implement functions of the network device may be a network device, or may be an apparatus, for example, a chip system, that can support the network device in implementing the functions. The apparatus may be installed in the network device. In the technical solutions provided in embodiments of this application, the technical solutions provided in embodiments of this application are described by using an example in which the apparatus configured to implement the functions of the network device is the network device and the network device is a base station.

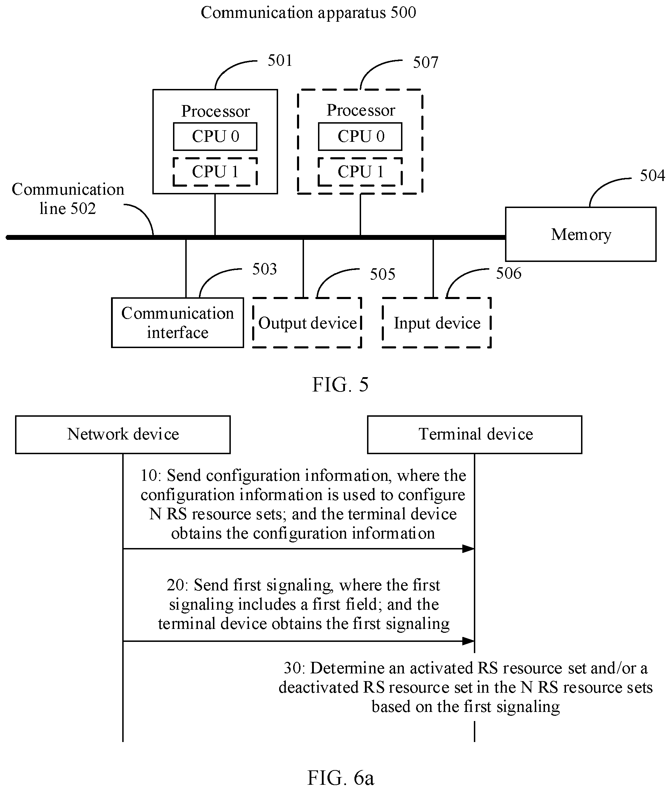

It should be noted that each of the terminal device and the network device in embodiments of this application may use a composition structure shown in FIG. 5 or include components shown in FIG. 5. FIG. 5 is a schematic diagram of a structure of a communication apparatus 500 according to an embodiment of this application. For example, when the communication apparatus 500 has the functions of the network device in embodiments of this application, the communication apparatus 500 may be the network device, a chip in the network device, or a chip system in the network device. When the communication apparatus 500 has functions of the terminal device in embodiments of this application, the communication apparatus 500 may be the terminal device, a chip in the terminal device, or a chip system in the terminal device.

As shown in FIG. 5, the communication apparatus 500 may include a processor 501, a communication line 502, and a communication interface 503. Optionally, the communication apparatus 500 may further include a memory 504. The processor 501, the memory 504, and the communication interface 503 may be connected by using the communication line 502.

The processor 501 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. Alternatively, the processor 501 may be another apparatus having a processing function, for example, a circuit, a component, or a software module.

The communication line 502 is configured to transmit information between components included in the communication apparatus 500.

The communication interface 503 is configured to communicate with another device or another communication network. The another communication network may be the Ethernet, a radio access network (radio access network, RAN), a wireless local area network (wireless local area network, WLAN), or the like. The communication interface 503 may be a radio frequency module or any apparatus that can implement communication. In embodiments of this application, only an example in which the communication interface 503 is the radio frequency module is used for description. The radio frequency module may include an antenna, a radio frequency circuit, and the like. The radio frequency circuit may include a radio frequency integrated chip, a power amplifier, and the like.

The memory 504 is configured to store instructions. The instructions may be computer programs.

The memory 504 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other optical disk storage, optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 504 may exist independently of the processor 501, or may be integrated with the processor 501. The memory 504 may be configured to store the instructions, program code, some data, or the like. The memory 504 may be located in the communication apparatus 500, or may be located outside the communication apparatus 500. This is not limited. The processor 501 is configured to execute the instructions stored in the memory 504, to implement the communication method provided in the following embodiments of this application.

Alternatively, optionally, in embodiments of this application, the processor 501 may perform processing related functions in the communication method provided in the following embodiments of this application, and the communication interface 503 is responsible for communication with another device or a communication network. This is not specifically limited in embodiments of this application.

Optionally, computer-executable instructions in embodiments of this application may also be referred to as application program code. This is not specifically limited in embodiments of this application.

In an example, the processor 501 may include one or more CPUs, for example, a CPU 0 and a CPU 1 in FIG. 5.

In an optional implementation, the communication apparatus 500 includes a plurality of processors. For example, in addition to the processor 501 in FIG. 5, the communication apparatus 500 may further include a processor 507.

In an optional implementation, the communication apparatus 500 further includes an output device 505 and an input device 506. For example, the input device 506 is a device such as a keyboard, a mouse, a microphone, or a joystick, and the output device 506 is a device such as a display screen or a speaker (speaker).

It should be noted that the communication apparatus 500 may be a desktop computer, a portable computer, a network server, a mobile phone, a tablet computer, wireless user equipment, an embedded device, a chip system, or a device having a structure similar to that in FIG. 5. In addition, the composition structure shown in FIG. 5 does not constitute a limitation on the communication apparatus. In addition to the components shown in FIG. 5, the communication apparatus may include more or fewer components than those shown in the figure, or some components may be combined, or different component arrangements may be used.

In embodiments of this application, the chip system may include a chip, or may include a chip and another discrete component.

The following describes the communication method provided in embodiments of this application with reference to the communication system shown in FIG. 1. The device in the following embodiments may have the components shown in FIG. 5. Actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

It should be understood that, in embodiments of this application, the information may be an uplink signal, uplink data, a downlink signal, downlink data, or one or more fields. For example, the uplink signal may be an uplink reference signal (uplink reference signal, UL RS). For example, the UL RS is an SRS or a demodulation reference signal (demodulation reference signal, DMRS). The downlink signal may be a downlink reference signal. The downlink reference signal may include a cell reference signal (cell reference signal, CRS), a channel state information reference signal (channel state information reference signal, CSI-RS), a synchronization signal/physical broadcast channel block (synchronous signal/PBCH block, SSB), a phase-tracking reference signal (phase-tracking reference signal, PTRS), and a tracking reference signal (tracking reference signal, TRS). Alternatively, the reference signal in embodiments of this application may be a reference signal in a future mobile communication system. This is not limited in this application. In the following example, only an example in which the reference signal is the SRS is used for description.

It should be understood that, in embodiments of this application, the RS refers to a same type of RS, for example, the CRS, the DMRS, or the SRS. An RS resource set may have a plurality of types of time domain behavior, for example, a periodic RS resource set, an aperiodic RS resource set, and a semi-persistent RS resource set. In embodiments of this application, an example in which a semi-persistent RS is configured is used for description.

It should be noted together that, in embodiments of this application, that a resource type of the RS resource set is set to semi-persistent is equivalent to that a time domain type of the RS resource set is semi-persistent, a time domain type of an RS resource included in the RS resource set is semi-persistent, an RS resource included in the RS resource set is a semi-persistent RS resource, or an RS corresponding to an RS resource included in the RS resource set is a semi-persistent RS.

It should be understood that the uplink data may be a physical uplink shared channel (physical uplink shared channel, PUSCH), data carried on a PUSCH, a physical uplink control channel (physical uplink control channel, PUCCH), or data carried on a PUCCH. This is not specifically limited in this application.

For ease of describing the technical solutions of this application, in this application, an example in which the reference signal is the SRS, and the SRS is used for antenna switching is used to describe the technical solutions of this application. However, it should be noted that the technical solutions of this application are also applicable to another type of signal. This description manner does not have limitation effect.

In embodiments of this application, sending of the SRS is equivalent to sending of an SRS resource, and sending of an SRS resource set is also equivalent to sending of an SRS included in the SRS resource set. Transmission of the SRS is also equivalent to transmission of the SRS resource. An RS corresponding to an RS resource is an RS sent on the RS resource. The descriptions are also applicable to similar descriptions in embodiments of this application, and are described together herein. Details are described below again.

In embodiments of this application, that the SRS is used for antenna switching means that a higher layer parameter usage of the SRS resource set is set to antenna switching (antennaswitching). Alternatively, the higher layer parameter usage of the SRS resource set in which the SRS resource corresponding to the SRS is located is set to antenna switching (antennaswitching). An antenna configuration is an antenna switching configuration.

In embodiments of this application, the information may be the one or more fields. For example, first information is an SP SRS resource set ID field, and second information is an A/D field.

In embodiments of this application, a first resource set is a first RS resource set; and first configuration information is RS resource configuration information, or first configuration information is RS resource configuration information. The resource set configuration information is equivalent to a resource set configuration, and first configuration information of different RS resources is different.

In embodiments of this application, a resource set identity ID may be determined based on a higher layer parameter included in higher layer signaling. For example, the higher layer signaling may be RRC signaling, and the higher layer parameter is SRS-ResourceSetId. An RS resource included in a resource set is equivalent to an RS resource corresponding to the resource set or an RS resource in the resource set. An identity indicating the resource set may be an indicated resource set ID, for example, SRS-ResourceSetId. Alternatively, an identity indicating the resource set may be an ID corresponding to an indicated resource set. For example, the identity is mapped to a relative ID based on the SRS-ResourceSetId, and the relative ID is 0 or 1.

In embodiments of this application, an active/inactive state refers to an active state and/or an inactive state. The active state is equivalent to an activated state, and the inactive state is equivalent to a deactivated state. For example, an active/inactive state of a reference signal resource set means that the reference signal resource set is activated or the reference signal resource set is deactivated. For another example, active/inactive states of a plurality of reference signal resource sets mean that some resource sets in the plurality of reference signal resource sets are activated, and the other resource sets are deactivated. Further, switching between the active/inactive states of the plurality of reference signal resource sets means that some resource sets are switched from active states to inactive states, and the other resource sets are switched from inactive states to active states. Alternatively, switching between active/inactive states of different RS resource sets is equivalent to switching between active states of RS resource sets. Switching between the active states of the RS resource sets is switching between the RS resource sets in the active states, in other words, switching the first resource set from an active state to an inactive state and switching the second resource set from an inactive state to an active state. Alternatively, switching of an active state of an RS resource set refers to switching the RS resource set to the active state or an inactive state. The active/inactive state is equivalent to an active/non-active state. The inactive state is equivalent to the non-active state.

In embodiments of this application, that a spatial relation of the first resource set is the same as a spatial relation of the second resource set means that reference signals of the first resource set and the second resource set are the same, or IDs of the reference signals are the same, where the reference signals are used to determine the spatial relations of the resource sets, or a higher layer parameter spatialRelationInfo of the first resource set is the same as a higher layer parameter spatialRelationInfo of the second resource set.

An embodiment of this application provides a communication method, applied to reference signal transmission between a network device and a terminal device. As shown in FIG. 6a, the method may include the following steps.

10: The network device sends configuration information, where the configuration information is used to configure N RS resource sets; and the terminal device obtains the configuration information.

In other words, the network device may configure the N RS resource sets for the terminal device based on the configuration information, where N is an integer greater than 1.

The terminal device receives the configuration information from the network device, and may obtain configuration parameters of the N RS resource sets based on the configuration information.

In an implementation, the configuration parameter of the RS resource set includes one or more of the following parameters: an RS resource set identity (Identity, ID), a resource type, usage, a parameter related to power control, a path loss reference signal, an RS time frequency resource location, a configuration parameter included in an RS resource, a parameter indicating a spatial relation, and the like.

20: The network device sends first signaling, where the first signaling includes a first field; and the terminal device obtains the first signaling.

30: The terminal device determines an activated RS resource set and/or a deactivated RS resource set in the N RS resource sets based on the first signaling.

The first signaling may be higher layer signaling sent by the network device, or downlink control information (Downlink Control Information, DCI). For example, the first signaling is a MAC CE, or the first signaling is RRC signaling. The first signaling may indicate to activate or deactivate the RS resource set. The terminal device may determine the activated RS resource set and/or the deactivated RS resource set in the N RS resource sets based on the first signaling, and then, send an RS on an RS resource included in the activated RS resource set.

In an implementation, when the first field is a first value, the first field indicates to activate M RS resource sets in the N RS resource sets. M is a positive integer not greater than N, in other words, M may be less than or equal to N.

In an implementation, the first field includes only one bit, and the first value may be 1 or 0. For example, when the first field is set to 1, it indicates to activate the M RS resource sets.

In an implementation, the first signaling is the MAC CE, and the first field is an A/D field in the MAC CE. In this case, when the A/D field is the first value, for example, 1, the first signaling indicates to activate the M RS resource sets in the N RS resource sets.

For example, N=2, and the configuration information is used to configure a first resource set and a second resource set, the first field is 1, and M=1. In this case, the first signaling may indicate to activate the first resource set or the second resource set in the first resource set and the second resource set.

Activation of the first resource set or activation of the second resource set may be specifically indicated by using another field. In an implementation, the first field indicates to activate the M RS resource sets in the N RS resource sets, the first signaling further includes an RS resource set identity field, and the RS resource set identity field indicates the M RS resource sets.

For example, the first signaling further includes a second field, for example, an SRS resource set ID field. The SRS resource set ID field indicates a second resource set identity. If the first field is 1, the first signaling indicates to activate the second resource set.

For example, when M=N=2, it may indicate to activate the first resource set and the second resource set when the first signaling is 1. In other words, both the first resource set and the second resource set are simultaneously in an active state. A prerequisite for which the first resource set and the second resource set are simultaneously in the active state is that a maximum quantity P of RS resource sets that are simultaneously in the active state and that are supported by the terminal device is greater than 1. The network device may obtain P based on capability information reported by the terminal device. This is described in detail below, and details are not described herein.

In an implementation, the first field indicates to activate the M RS resource sets in the N RS resource sets, and the remaining RS resource sets in the N RS resource sets other than the M RS resource sets are inactive resource sets. In another embodiment, the remaining (N-M) resource sets are all inactive resource sets.

It should be noted that, in this embodiment of this application, that an RS resource set is an inactive resource set means that a status of the RS resource set is a deactivated state, the RS resource set is not activated, or the RS resource set is deactivated.

If at least one resource set in the remaining (N-M) RS resource sets is in an active state before the terminal device receives the first signaling, the terminal device activates the M RS resource sets after receiving the first signaling, and deactivates a resource set in an active state in the remaining RS resource sets, so that the remaining RS resource sets in the N RS resource sets other than the M RS resource sets are inactive resource sets.

For example, N=2, M=1, the first signaling is the MAC CE, the first signaling includes the first field and the second field, the first field is the A/D field in the MAC CE, and the second field is the SRS resource set ID field. When the A/D field is 1, and the SRS resource set ID field indicates a first resource set identity, the first resource set is activated, and the second resource set in the configured two RS resource sets other than the first resource set is an inactive resource set. In this case, if the second resource set is in an active state before the terminal device receives the first signaling, the second resource set is deactivated after the terminal device receives the first signaling.

In an implementation, when the first field is a second value, the first field indicates that K RS resource sets in the N RS resource sets are inactive. K is a positive integer not greater than N, in other words, K may be less than or equal to N.

In an implementation, when the first field includes only one bit, it indicates that the K RS resource sets are in an inactive state when the first field is set to 0.

For example, N=2, and the configuration information is used to configure a first resource set and a second resource set. In addition, for example, the first field is 0, and K=1. In this case, the first signaling may indicate that the first resource set in the first resource set and the second resource set are in an inactive state, or the second resource set is in an inactive state. For another example, when the first field is 0, and K=N=2, the first signaling indicates that the first resource set and the second resource set are both in an inactive state.

In an implementation, the first field indicates to deactivate the K RS resource sets in the N RS resource sets, the first signaling does not include an RS resource set ID field or the first signaling further includes an RS resource set identity field, and one or more bits in the RS resource set identity field are reserved bits.

In an implementation, when N=2, in other words, when the configuration information is used to configure two reference signal RS resource sets in step 10, resource types of the two RS resource sets may be semi-persistent. Identities IDs of the two configured resource sets are respectively IDa and IDb, and the first field includes only one bit.

When the first field is set to 1, and the RS resource set ID field indicates IDa, an RS resource set whose RS resource set ID is IDa is activated, and an RS resource set whose resource set ID is IDb is an inactive resource set.

When the first field is set to 1, and the RS resource set ID field indicates IDb, an RS resource set whose RS resource set ID is IDb is activated, and an RS resource set whose resource set ID is IDa is an inactive resource set.

When the first field is set to 0, an RS resource set whose RS resource set ID is IDa is an inactive resource set, and an RS resource set whose resource set ID is IDb is an inactive resource set.

For a specific example, refer to the following Table 1:

**Table 1 First field and an indication of an active/inactive state of a resource set**

| First field (A/D field) | RS resource set ID field | Active/inactive states of the two resource sets |
|---|---|---|
| 1 | IDa | IDa is activated, and IDb is deactivated |
| 1 | IDb | IDb is activated, and IDa is deactivated |
| 0 | Not applicable | IDa is deactivated, and IDb is deactivated |

In an implementation, when N=4, in other words, when the configuration information is used to configure four reference signal RS resource sets in step 10, resource types of the four RS resource sets may be set to semi-persistent. IDs of the four resource sets are respectively IDa, IDb, IDc, and IDd, and the first field includes only one bit.

When the first field is set to 1, and the RS resource set ID field indicates that IDs of two RS resource sets are IDa and IDc, the RS resource sets whose RS resource set IDs are IDa and IDc are activated, and RS resource sets whose resource set IDs are IDb and IDd are inactive resource sets.

When the first field is set to 1, and the RS resource set ID field indicates that IDs of two RS resource sets are IDb and IDd, the RS resource sets whose RS resource set IDs are IDb and IDd are activated, and RS resource sets whose resource set IDs are IDa and IDc are inactive resource sets.

When the first field is set to 0, RS resource sets whose RS resource set IDs are IDa, IDb, IDc, and IDd are inactive resource sets.

In an optional implementation, in this embodiment of this application, a quantity of RS resource sets that are simultaneously in an active state and that are supported by the terminal device is 1. Alternatively, in this embodiment of this application, a quantity of RS resource sets that are in an active state and that are supported by the terminal device in a first time period is 1, and the first time period may be one or more slots. Alternatively, in this embodiment of this application, the terminal device supports determining active/inactive states of the N RS resource sets based on one piece of signaling.

In an implementation, before step 10, the terminal device may further report capability information to the network device. The capability information may indicate whether the terminal device supports determining the activated RS resource set and/or the deactivated RS resource set in the N RS resource sets based on the first signaling.

For example, the capability information may indicate whether the terminal device supports determining the active/inactive states of the N RS resource sets based on one piece of signaling. For example, the capability information indicates that the active/inactive states of the N RS resource sets are determined based on one piece of signaling. When the first field is 1, and the RS resource set identity field indicates the first resource set identity, the terminal device determines, based on the first signaling, that the first resource set is activated and the second resource set is deactivated. For another example, the capability information indicates that determining the active/inactive states of the N RS resource sets based on one piece of signaling is not supported. When the first field is 0, and the RS resource set identity field indicates the first resource set identity, the terminal device determines, based on the first signaling, that the first resource set is deactivated, and cannot determine an active/inactive state of the second resource set.

For example, the capability information may indicate that the maximum quantity of RS resource sets that are simultaneously in the active state and that are supported by the terminal device is P, where P is a positive integer greater than or equal to 1. The capability information may be carried in uplink control information (Uplink Control Information, UCI), or may be carried in MAC CE signaling sent by the terminal device to the network device. It should be noted that the network device may alternatively determine the capability information based on other information reported by the terminal device, for example, determine P based on a quantity of TRPs or a quantity of transmit panels simultaneously supported by the UE.

For example, the capability information reported by the terminal device indicates that P is equal to 1. In this case, the terminal device determines, based on the first signaling, that the quantity of RS resource sets in the active state in the N RS resource sets is 1.

In an optional implementation, if the quantity P of RS resource sets that are simultaneously in the active state and that are supported by the terminal device is equal to 1, the first resource set is deactivated when the first signaling indicates to activate the second resource set.

In an optional implementation, if the quantity P of RS resource sets that are simultaneously in the active state and that are supported by the terminal device is greater than 1, the first resource set is not deactivated when the first signaling indicates to activate the second resource set.

In an optional implementation, if the quantity P of RS resource sets that are simultaneously in the active state and that are supported by the terminal device is greater than 1, when the first signaling indicates to activate the second resource set, the terminal device may determine, based on whether a configuration parameter of the first resource set meets a preset condition, whether the first resource set is in an inactive state. For example, when the first signaling indicates to activate the second resource set, and the configuration parameter of the first resource set meets the preset condition, the first resource set is in the inactive state. For another example, when the first signaling indicates to activate the second resource set, and the configuration parameter of the first resource set does not meet the preset condition, the first resource set is in the inactive state. In other words, when the second resource set is activated, whether the first resource set is deactivated is associated with the configuration parameter of the first resource set. The configuration parameter of the first resource set is a spatial relation configuration parameter, a time domain configuration parameter, or an antenna configuration parameter.

That a configuration parameter of the first resource set meets a preset condition may be specifically as follows: At least one of a spatial relation, a corresponding beam, a corresponding TRP, or a corresponding power control parameter of the first resource set is the same as that of the second resource set. For example, when the spatial relation of the first resource set is the same as that of the second resource set, the first resource set is deactivated. Alternatively, when the corresponding beam of the first resource set is the same as that of the second resource set, when the corresponding TRP of the first resource set is the same as that of the second resource set, or when the corresponding power control parameter of the first resource set is the same as that of the second resource set, the first resource set is deactivated.

An embodiment of this application provides a communication method, applied to reference signal transmission between a network device and a terminal device. For example, an RS is an SRS. Optionally, this embodiment of this application may be applied to a case in which the network device configures two or more SRS resource sets for the terminal device. According to a predefined rule between the network device and the terminal device, when the network device activates one of the SRS resource sets, other previously activated SRS resource sets are automatically deactivated. Therefore, signaling overheads generated when the network device indicates to switch the SRS resource set for the terminal device are reduced, and transmission efficiency is improved. Resource types of a plurality of SRS resource sets may be the same or different. In the following embodiments, only a semi-persistent SP SRS resource set is used as an example, and a reference signal resource set of another resource type may alternatively be used.

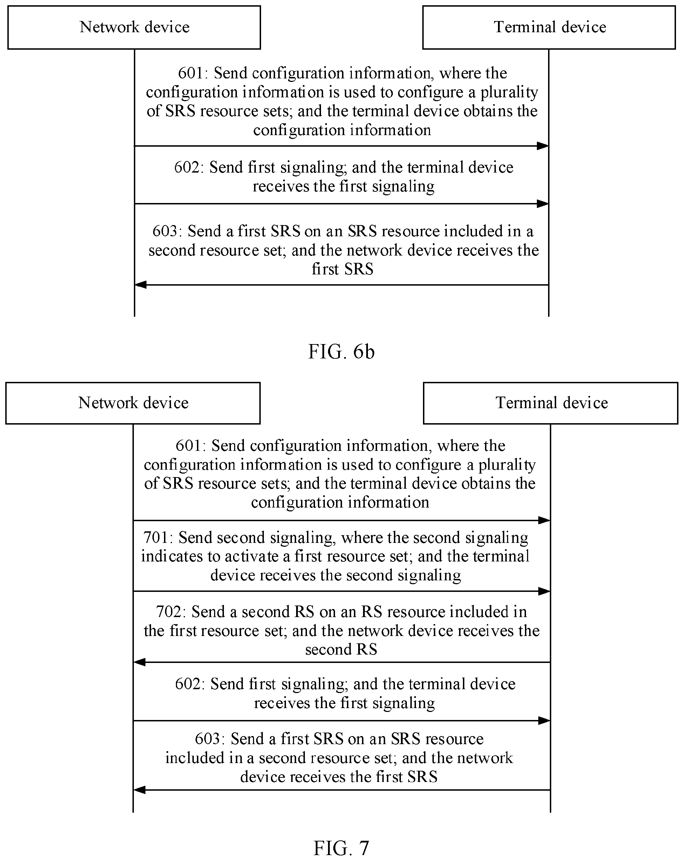

As shown in FIG. 6b, the method may include the following steps.

601: The network device sends configuration information, where the configuration information is used to configure the plurality of SRS resource sets; and the terminal device obtains the configuration information.

The plurality of SRS resource sets configured by using the configuration information include at least a first resource set and a second resource set. In other words, the configuration information may be used to configure two resource sets, may be used to configure three resource sets, or may be used to configure four resource sets. For example, the configuration information is used to configure the four resource sets, any resource set in the four resource sets is the first resource set, and any resource set other than the first resource set is the second resource set. The descriptions are also applicable to similar descriptions in embodiments of this application, and are described together herein. Details are not described below again.

In an implementation, resource types of the first resource set and the second resource set are set to semi-persistent, in other words, both the first resource set and the second resource set are semi-persistent SRS resource sets (SP SRS resource sets). Alternatively, the resource types of the first resource set and the second resource set are set to be aperiodic or set to periodic.

It should be noted that, that the configuration information in this embodiment of this application is used to configure the first resource set and the second resource set means that the configuration information includes a configuration parameter corresponding to the first resource set and a configuration parameter corresponding to the second resource set, or the configuration information is used to configure the first resource set and the second resource set. The configuration parameter corresponding to the first resource set and the configuration parameter corresponding to the second resource set are higher layer parameters used to configure the first resource set and the second resource set.

In an implementation, the configuration information may include the configuration parameter corresponding to the first resource set and the configuration parameter corresponding to the second resource set, for example, frequency domain configuration parameters, time domain configuration parameters, use cases usage, or resource set IDs. The first resource set includes at least one SRS resource, and the second resource set includes at least one SRS resource.

A first resource set identity may be determined based on a resource set ID corresponding to the first resource set, and a second resource set identity may be determined based on a resource set ID corresponding to the second resource set. Specifically, the resource set ID corresponding to the first resource set may be the first resource set identity, and the resource set ID corresponding to the second resource set may be the second resource set identity. Alternatively, a value relationship between the resource set ID corresponding to the first resource set and the resource set ID corresponding to the second resource set is compared. For example, when the resource set ID corresponding to the first resource set is less than the resource set ID corresponding to the second resource set, the first resource set identity is 1 and the second resource set identity is 2. When the resource set ID corresponding to the first resource set is greater than the resource set ID corresponding to the second resource set, the first resource set identity is 2 and the second resource set identity is 1. Alternatively, values of other identities having a value relationship are determined based on the value relationship between the resource set ID corresponding to the first resource set and the resource set ID corresponding to the second resource set. For example, the first resource set identity is 0 and the second resource set identity is 1, or the first resource set identity is 1 and the second resource set identity is 0.

In an implementation, the configuration information further indicates that usage corresponding to the first resource set and usage corresponding to the second resource set are the same or similar. For example, the first resource set and the second resource set are both set to antenna switching. In other words, a configuration parameter usage included in the first resource set and a configuration parameter usage included in the second resource set in the configuration information are both set to antennaSwitching.

In an implementation, the configuration information further indicates that resource types corresponding to the first resource set and the second resource set are the same.

Further, in an implementation, the first resource set and the second resource set are associated with a same antenna configuration. As described above, the antenna configuration is related to a quantity of SRS ports, and the antenna configuration is related to a quantity of SRS resources. In other words, the antenna configuration is related to a quantity of uplink antennas and a quantity of downlink antennas that are reported by the terminal device. For example, the antenna configuration is xTyR, where xT indicates that a quantity of transmit antennas is x, and yR indicates that a quantity of receive antennas is y, where x and y are positive integers. For example, x={1, 2, 4}, and y={6, 8}. For example, each of a terminal device antenna configuration corresponding to the first resource set and a terminal device antenna configuration corresponding to the second resource set is 1T4R, 2T4R, or the like. Optionally, each of a quantity of resources included in the first resource set and a quantity of resources included in the second resource set is y/x.

In an optional implementation, in this embodiment of this application, a quantity of RS resource sets that are simultaneously in an active state and that are supported by the terminal device is 1. Alternatively, in this embodiment of this application, a quantity of RS resource sets that are in an active state and that are supported by the terminal device in a first time period is 1, and the first time period may be one or more slots.

In an implementation, before the network device sends the configuration information, the terminal device may further report first UE capability information. The first UE capability information indicates that a maximum quantity of SRS resource sets that are simultaneously in the active state and that are supported by the terminal device is P, where P is a positive integer greater than or equal to 1. The first UE capability information may be carried in UCI, or may be carried in MAC CE signaling sent by the terminal device to the network device. It should be noted that the network device may alternatively determine the first UE capability information based on other information reported by the terminal device, for example, determine the first UE capability information based on a quantity of TRPs or a quantity of transmit panels simultaneously supported by the UE.

In the foregoing implementation, the first UE capability information reported by the terminal device may indicate that P is equal to 1.

In an optional implementation, the terminal device in this embodiment of this application supports deactivation of the first resource set when the second resource set is activated.

In an implementation, before the network device sends the configuration information, the terminal device may further report second UE capability information. The second UE capability information indicates whether the terminal device supports deactivation of the first resource set when the second resource set is activated. For example, the capability information indicates that the terminal device supports deactivation of the first resource set when the second resource set is activated, and that the first resource set is deactivated when first signaling indicates to activate the second resource set. For another example, the capability information indicates that the terminal device does not support deactivation of the first resource set when the second resource set is activated, and that the first resource set is not deactivated when first signaling indicates to activate the second resource set, or indicates not to activate the second resource set when the first resource set is in an active state.

In the foregoing possible implementation, whether the first resource set is deactivated based on the first signaling is associated with the capability information reported by the terminal device. Specifically, when the maximum quantity of RS resource sets that are simultaneously in the active state and that are supported by the terminal device is 1, the terminal device may deactivate, based on the first signaling, the first resource set when the second resource set is activated. Therefore, based on the foregoing implementation, it is determined, based on the capability information reported by the terminal device, whether an active/inactive state of one resource set is associated with another resource set, so that a signaling indication is more flexible, and compatibility with an existing protocol and signaling is maintained as much as possible. Resource set indications for different types of terminal devices are implemented, so that scheduling flexibility is improved, and signal transmission efficiency is improved.

Further, in an implementation, a spatial relation corresponding to the first resource set is the same as a spatial relation corresponding to the second resource set. In other words, spatial relations of all SRS resources included in the first resource set are associated with spatial relations of all RS resources included in the second resource set. Alternatively, spatial relations of all SRS resources included in the first resource set are the same as spatial relations of all SRS resources included in the second resource set. Further, spatial relations of all RS resources included in the first resource set are the same, the spatial relations of all the SRS resources included in the second resource set are the same, and the spatial relation corresponding to the first resource set is the same as the spatial relation corresponding to the second resource set.

A spatial relation of a resource set refers to a beam used by each SRS resource included in the resource set in a transmission process, refers to a spatial sending filter used by each SRS resource included in the resource set in a sending process, or refers to a spatial receiving filter used by each SRS resource included in the resource set in a receiving process. Therefore, that the spatial relation corresponding to the first resource set is the same as the spatial relation corresponding to the second resource set means that beams used by each SRS resource included in the first resource set and each SRS resource included in the second resource set are the same in a transmission process, or spatial sending filters are the same, or spatial receiving filters are the same. An indication manner of the spatial relation is described below, and details are not described herein.

The terminal device receives the configuration information from the network device, and may obtain a configuration parameter of the first resource set and a configuration parameter of the second resource set based on the configuration information.

In an implementation, a configuration parameter of a resource set includes one or more of the following parameters: an SRS resource set ID, a resource type, usage, a parameter related to power control, a path loss reference signal, an SRS resource, a configuration parameter included in the SRS resource, a parameter indicating a spatial relation, and a parameter indicating a TRP corresponding to an SRS. The configuration parameter included in the SRS resource includes one or more of the following parameters: an SRS resource ID, a quantity of SRS ports, a phase-tracking reference signal (Phase-tracking Reference Signal, PTRS) port index, a transmission comb (comb), resource mapping, a frequency domain parameter, a sequence-related parameter, a time domain parameter, and the spatial relation.

602: The network device sends the first signaling, and the terminal device receives the first signaling.

The first signaling indicates to activate the second resource set.

In other words, an active state of the second resource set is associated with the first signaling. When the first signaling includes indication information for activating the second resource set, the active state of the second resource set on a terminal device side is activated.

In an implementation, the configuration information is used to configure the plurality of SRS resource sets. When one SRS resource set is activated, in the plurality of SRS resource sets, an SRS resource set other than the SRS resource set is deactivated, or an SRS resource set in an active state other than the SRS resource set is deactivated. The plurality of SRS resource sets are associated with a same configuration parameter. For example, if the configuration information is used to configure the first resource set and the second resource set, and the first signaling indicates to activate the second resource set, the first resource set in the active state is deactivated.

That the plurality of SRS resource sets are associated with a same configuration parameter means that the plurality of SRS resource sets meet one or more of the following conditions: usage of the plurality of SRS resource sets is the same, resource types of the plurality of SRS resource sets are the same, spatial relations of the plurality of SRS resource sets are the same, beams corresponding to the plurality of SRS resource sets are the same, and TRPs corresponding to the plurality of SRS resource sets are the same.

In an optional implementation, if the quantity of SRS resource sets that are simultaneously in the active state and that are supported by the terminal device is 1, the first resource set is deactivated when the second resource set is activated. Alternatively, when the first resource set is in the active state, the network device is not allowed to send the first signaling to indicate to activate the second resource set. In an embodiment, the network device or user equipment determines activation or deactivation of the resource set according to a preset rule, where the preset rule is that when the first resource set is in the active state, the network device does not send the first signaling to indicate to activate the second resource set.

In an optional implementation, if the quantity of SRS resource sets that are simultaneously in the active state and that are supported by the terminal device is greater than 1, the first resource set is not deactivated when the second resource set is activated. That the first resource set is not deactivated means that the first resource set remains in the active state.

In an implementation, if the quantity of SRS resource sets that are simultaneously in the active state and that are supported by the terminal device is greater than 1, when the second resource set is activated, the terminal device may determine, based on whether the configuration parameter of the first resource set meets a preset condition, whether to deactivate the first resource set. In other words, whether the first resource set is deactivated is associated with the configuration parameter of the first resource set. The configuration parameter of the first resource set is a spatial relation configuration parameter, a time domain configuration parameter, or an antenna configuration parameter.

That the configuration parameter of the first resource set meets a preset condition may be specifically as follows: At least one of a spatial relation, a corresponding beam, a corresponding TRP, or a corresponding power control parameter of the first resource set is the same as that of the second resource set. For example, when the spatial relation of the first resource set is the same as that of the second resource set, the first resource set is deactivated. Alternatively, when the corresponding beam of the first resource set is the same as that of the second resource set, when the corresponding TRP of the first resource set is the same as that of the second resource set, or when the corresponding power control parameter of the first resource set is the same as that of the second resource set, the first resource set is deactivated.

In an implementation, when the terminal device does not report the first UE capability information to the network device, when the second resource set is activated, the terminal device may determine, based on whether the configuration parameter of the first resource set meets the preset condition, whether to deactivate the first resource set. That the configuration parameter of the first resource set meets the preset condition may be specifically as follows: At least one of the spatial relation, the corresponding beam, the corresponding TRP, or the corresponding power control parameter of the first resource set is the same as that of the second resource set.

Based on the foregoing implementation, it is determined, based on information reported by the terminal device or a configuration parameter of a resource set, whether an active/inactive state of the resource set is associated with another resource set, so that the signaling function is more flexible, and compatibility with the existing protocol and signaling is maintained as much as possible. The resource set indications for different types of terminal devices are implemented, so that scheduling flexibility is improved, and signal transmission efficiency is improved.

In an implementation, the first signaling may include first information and second information. The first information indicates a resource set identity, and the second information indicates to activate/deactivate a resource set indicated by the first information. For example, the first information indicates the second resource set identity ID, and the second information indicates to activate the resource set indicated by the first information. The first resource set is deactivated based on the first information and the second information, or the second resource set is activated and the first resource set is deactivated based on the first information and the second information.

In an implementation, the first signaling may be carried in a MAC CE, or the first signaling may be specifically a MAC CE. Alternatively, the first signaling may be RRC signaling.

For example, with reference to FIG. 4a or FIG. 4b, the MAC CE includes an SP SRS resource set ID (SP SRS Resource Set ID) field, and a length of the field is 4 bits. The MAC CE further includes an A/D field, and a length of the field is 1 bit. When the A/D field is set to 1, it indicates activation. Otherwise, it indicates deactivation. The first signaling may be carried in one or more bits of the SP SRS resource set ID field and the A/D field in the MAC CE. Alternatively, the first signaling includes one or more bits of the SP SRS resource set ID field and the A/D field in the MAC CE.

The SP SRS resource set ID field indicates the first information, in other words, the SP SRS resource set ID field indicates the second resource set identity ID. When the A/D field is set to 1, it indicates the second information, in other words, the MAC CE indicates to activate the second resource set. Optionally, the MAC CE also indicates to deactivate the first resource set.

In a possible implementation, the MAC CE indicates to activate the second resource set, and the first resource set is deactivated based on the MAC CE.

It can be learned that, when the A/D field in the MAC CE is set to 0, it indicates to deactivate an SRS resource set indicated by the SP SRS resource set ID field. For example, if the SP SRS resource set ID field in the MAC CE indicates a first resource set identity ID, the MAC CE is used to deactivate the first resource set. In addition, it should be noted that a prerequisite for the network device to send an indication for deactivating the first resource set is that the network device has sent an indication for activating the first resource set before sending the MAC CE for deactivating the first resource set. Further, in this embodiment of the present invention, before the first resource set is deactivated, the network device has sent the indication for activating the first resource set.

In a possible implementation, when the A/D field in the MAC CE is set to 0, it indicates to deactivate all SP SRS resource sets configured by using the configuration information, or it indicates to deactivate all SP SRS resource sets used for antenna switching and configured by using the configuration information.

603: The terminal device sends a first SRS on an SRS resource included in the second resource set, and the network device receives the first SRS.

The terminal device determines, based on the first signaling, that the second resource set is activated, and the terminal device sends the first SRS on the SRS resource included in the second resource set. When the second resource set is activated, the first resource set previously in the active state is deactivated.

In an implementation, the terminal device obtains the first signaling, and obtains the first information and the second information that are included in the first signaling. The terminal device determines, based on the first information and the second information, that the second resource set is activated and the first resource set is deactivated. The determining may be further understood as that the terminal device applies an assumption or setting for sending an RS corresponding to the second resource set, and/or may be understood as that the terminal device applies an assumption or setting for stopping sending an RS corresponding to the second resource set.

In other words, based on the first signaling, the second resource set is activated, and the first resource set is deactivated.

Specifically, when the network device sends an indication for activating the second resource set to the terminal device, the terminal device deactivates the first resource set that has been previously activated and is still in the active state, and the terminal device may stop, based on the first signaling, sending a second RS on an RS resource included in the first resource set. Stopping sending a second RS may also be that the terminal device no longer sends the second RS on the RS resource included in the first resource set until a command for activating the first resource set is received again.

The first SRS is an SRS sent on an SRS resource included in a second SRS resource set, an SRS included in a second SRS resource set, an SRS configured by using a second SRS resource set, or an SRS corresponding to a second SRS resource set. A second SRS is an SRS sent on an SRS resource included in the first SRS resource set, an SRS included in a first SRS resource set, an SRS configured by using a first SRS resource set, or an SRS corresponding to a first SRS resource set.

The first resource set is semi-persistent. When the first resource set is activated or the first resource set is in the active state, the terminal device determines, based on a time domain offset value configured by the network device, a location for sending the first SRS for the first time, and repeatedly sends or cyclically sends the SRS based on a configured period. The sending of the first SRS is not stopped until a deactivation command is received.

It should be noted that before the network device sends the first signaling, the network device has activated the first resource set for the terminal device, and the terminal device sends the second SRS on the SRS resource included in the first resource set.

It should be noted that the first SRS is an SRS corresponding to the second resource set, and the second SRS is an SRS corresponding to the first resource set. In this embodiment of this application, the first SRS and the second SRS do not refer to identities of sent SRSs, but refer to SRSs sent based on different SRS resource sets. The first SRS is an SRS corresponding to the newly activated second resource set, and the second SRS is an SRS corresponding to the first resource set that is already in the active state.

In an implementation, before step 602, in other words, before the terminal device obtains the first signaling, as shown in FIG. 7, the method may further include the following steps.

701: The network device sends second signaling, where the second signaling indicates to activate the first resource set; and the terminal device receives the second signaling.

The second signaling includes third information and fourth information, the third information indicates the first resource set identity, and the fourth information indicates to activate an RS resource set indicated by the third information.

For example, with reference to FIG. 4a or FIG. 4b, the second signaling may be carried in one or more bits of an SP SRS resource set ID field and an A/D field in a MAC CE. The second signaling includes the SP SRS resource set ID field and the A/D field. The SP SRS resource set ID field indicates the third information, in other words, the SP SRS resource set ID field indicates the resource set ID corresponding to the first resource set. The A/D field indicates the fourth information. For example, when the A/D field is set to 1, it indicates activation.

702: The terminal device sends a second RS on an RS resource included in the first resource set, and the network device receives the second RS.

After obtaining the second signaling, the terminal device determines, based on an identity ID indication and an activation indication that are of the first resource set and that are included in the second signaling, to activate the first resource set, and sends the second RS to the network device on the RS resource included in the first resource set. The network device receives the second RS.

For example, the second signaling may be a MAC CE. With reference to FIG. 4a and FIG. 4b, the second signaling may be carried in an A/D field and an SP SRS resource set ID field in the MAC CE. When the A/D field in the MAC CE is set to 1, it indicates activation. The SP SRS resource set ID field in the MAC CE indicates the first resource set identity ID.

For example, the first resource set is specifically a first SRS resource set. In this case, the terminal device may receive, in a slot n, the MAC CE that carries an activation command. The MAC CE may be carried on a physical downlink shared channel (Physical Downlink Shared Channel, PDSCH). The terminal device sends, in the slot n, a physical uplink control channel (Physical Uplink Control Channel, PUCCH) that carries hybrid automatic repeat request-acknowledgment (Hybrid Automatic Repeat-reQuest Acknowledgment, HARQ-ACK) information. The terminal device starts to send a second SRS in a slot after the slot n.

The network device may receive, based on the configuration information and indication information (the first signaling or the second signaling) for the terminal device, an SRS on an SRS resource included in the first resource set or an SRS resource included in the second resource set.

In an implementation, that the terminal device sends a first SRS on an SRS resource included in the second resource set, and the network device receives the first SRS in step 603 may further specifically include: The terminal device stops sending the second SRS on the SRS resource included in the first resource set, and the network device stops receiving the second RS on the SRS resource included in the first resource set.

In an implementation, that the terminal device stops sending the second SRS and the terminal device sends a first SRS specifically includes:

The terminal device obtains the first signaling in a first time unit; and the terminal device stops sending the second SRS starting from a time unit after a first time interval elapses in the first time unit, and starts to send the second SRS until signaling for activating the first resource set is received; and/or the terminal device sends a first SRS starting from a time unit after a second time interval elapses in the first time unit. The sending the first SRS may be periodically sending the SRS.

The network device sends the first signaling in the first time unit; the network device stops receiving the second RS starting from the time unit after the first time interval elapses in the first time unit, and starts to receive the second SRS only after the signaling for activating the first resource set is sent; and/or the network device starts to receive the first SRS starting from the time unit after the second time interval elapses in the first time unit. The receiving the first SRS may be periodically receiving the SRS.

The first time unit may be the slot n in which the terminal device receives the PDSCH that carries the activation command, or the slot n in which the terminal device sends the PUCCH that carries the HARQ-ACK information.

In a possible implementation, the terminal device stops sending the second RS starting from the time unit after the first time interval elapses in the first time unit. For example, the terminal device starts to apply an assumption of stopping sending the second RS starting from a first time unit after the first time interval elapses in the first time unit. The terminal device sends a first RS starting from the time unit after the second time interval elapses in the first time unit. For example, the terminal device starts to apply an assumption of sending the first RS starting from a first time unit after the second time interval elapses in the first time unit.

In a possible implementation, the time unit may be a slot, the first time unit may be the slot n, a length of the first time interval is $3N_{slot}^{subframe,\mu}$, and $\mu$ is a configuration parameter of a subcarrier spacing (subcarrier spacing, SCS) of the PUCCH. For example, the SCS may be 15 kHz, 30 kHz, or 120 kHz, and $\mu$ may be 0, 1, 2, 3, or the like. $N_{slot}^{subframe,\mu}$ is a quantity of slots (slots) included in a subframe (subframe) corresponding to the corresponding SCS, and $N_{slot}^{subframe,\mu}$ is a positive integer. Therefore, a value of $3N_{slot}^{subframe,\mu}$ may be determined based on the subcarrier spacing. The terminal device may stop sending the second RS in a first slot after a slot n + $3N_{slot}^{subframe,\mu}$.

In a possible implementation, a start of the second time interval is an L$^{th}$ time unit after the first time interval, or is a time unit for stopping sending the second RS (in this case, L=0). L is a positive integer, for example, L=1.

In a possible implementation, a length of the second time interval is the first time interval plus L time units, or is the time unit for stopping sending the second RS. L is an integer. For example, N is a natural number less than 3. For example, L=1, or L=0. Alternatively, L=2. A value of L may be predefined, for example, L=0. Alternatively, the value of L is configured based on a higher layer parameter, or is reported by the UE, or is determined based on a capability or information reported by the UE. In this case, the terminal device may start to send the first RS in a first slot after a slot $n + 3N_{slot}^{subframe,\mu}+L$.

Based on the foregoing implementation, a smaller value of L indicates shorter preparation time required when the terminal device performs SP SRS resource set switching. When L is less than 3, it indicates that compared with a manner in which two MAC CEs are sent to separately deactivate the first resource set and activate the second resource set, this implementation requires shorter switching time and improves switching efficiency.

In a possible implementation, the length of the second time interval is greater than the length of the first time interval. The time interval may be understood as a time length.

In a possible implementation, the terminal device uses stopping sending the second RS as a start point, and applies the assumption of sending the first RS from a first time unit after a third time interval. Alternatively, the terminal device uses starting to apply the assumption of stopping sending the second RS as a start point, and applies the assumption of sending the first RS starting from a first time unit after the third time interval. The third time interval may be M time units. M is an integer. For example, M=0, or M=1. A value of M may be predefined, may be configured based on the higher layer parameter, may be reported by the UE, or may be determined based on the capability or the information reported by the UE.

For example, after the terminal device receives, in the slot n, the PDSCH that carries a command for activating a second SP SRS resource set, the terminal device sends, in the slot n, the PUCCH that carries the HARQ-ACK information, and the terminal device may start to send, in the first slot after the slot $n + 3N_{slot}^{subframe,\mu}$, an SRS configured by using the second SRS resource set (namely, a resource set activated by the MAC CE). In addition, the terminal device starts to stop sending, in the first slot after the slot $n + 3N_{slot}^{subframe,\mu}$, an SRS configured by using the first SRS resource set (namely, a deactivated resource set).

In the foregoing implementation, the network device does not need to change an existing signaling format of indication information for activating or deactivating an SP resource set, for example, the MAC CE, and may further indicate to deactivate the first resource set in an implicit manner when indicating to activate the second resource set. Therefore, signaling overheads of switching an RS resource set by the network device for the terminal device can be reduced, and time required for switching the RS resource set can be further shortened, thereby improving communication efficiency.

With regard to the foregoing descriptions, it should be noted that for the indication manner of the spatial relation, in a current configuration of an SRS resource set, for SP SRS resources, one or two SP SRS resource sets may be configured for same UE or a same antenna configuration (xTyR). For AP SRS resources, one or more AP SRS resource sets may be configured for same UE or a same antenna configuration (xTyR). With reference to the formats of the two pieces of MAC CE signaling shown in FIG. 4a and FIG. 4b, it can be learned that currently, one piece of MAC CE signaling can only indicate a spatial relation for each SRS resource in a same SRS resource set.

Based on the foregoing embodiment, the first resource set and the second resource set that are configured by the network device are associated with a same antenna configuration. Further, the first resource set and the second resource set further correspond to a same spatial relation. To ensure that spatial relations of SRSs in a same antenna configuration are the same, an embodiment of this application further provides a communication manner. Spatial relations of SRS resources in an SRS resource set are simultaneously indicated by using indication information for activating or deactivating the resource set, so that the spatial relations of the SRSs in the same antenna configuration are the same.

In an implementation, when the network device sends the first signaling to the terminal device, and the first signaling indicates that a spatial relation of an RS resource in the first resource set is a first spatial relation, a spatial relation of an RS resource in at least one second resource set associated with the first RS resource set is also the first spatial relation.

The first signaling may be a MAC CE or DCI. The first signaling may include an indication for activating the first resource set, or may not include an indication for activating the first resource set. For example, a resource type of the first resource set is semi-persistent, and the first signaling includes the indication for activating the first resource set. For another example, a resource type of the first resource set is aperiodic, and the first signaling does not include the indication for activating the first resource set.

In an implementation, the first spatial relation may be determined based on information about a reference signal indicated by the first signaling. The information about the reference signal may include at least one of a reference signal class, a reference signal identity, an identity of a serving cell in which the reference signal is located, or an identity of a BWP in which the reference signal is located.

For example, the first resource set and the second resource set are configured as SRS resource sets. The at least one second resource set associated with the first resource set meets one or more of the following conditions: The resource type of the first resource set is the same as a resource type of the second resource set; a resource included in the first resource set and a resource included in the second resource set include a same quantity of SRS ports; a quantity of resources included in the first resource set is the same as a quantity of resources included in the second resource set; the first resource set and the second resource set are configured by using same higher layer signaling RRC; usage of the first resource set is the same as usage of the second resource set (for example, usage (usage) is set to antenna switching); antenna configurations corresponding to the first resource set and the second resource set are the same; and a first configuration parameter included in the first resource set is the same as a first configuration parameter included in the second resource set. The first configuration parameter indicates a TRP corresponding to the resource set, or indicates a receiving node corresponding to the resource set. For example, the first resource set and the second resource set both correspond to a first TRP.

In the foregoing implementation, it is specified in a pre-defined protocol that, by default, spatial relations of all SRS resources included in the first resource set and spatial relations of all SRS resources included in the second resource set are simultaneously indicated in the indication information that is for activating or deactivating the resource set and that is sent by the network device to the terminal device. Therefore, it can be ensured that the spatial relations of the SRSs in the same antenna configuration are the same, and no dedicated signaling indication is required, thereby reducing the signaling overheads. It is ensured that the spatial relations of the SRSs in the same antenna configuration are the same, so that accuracy of channel information estimation can be improved, and system communication quality can be improved.

In addition, an embodiment of this application further provides a communication method, applied to reference signal transmission between a network device and a terminal device. When the network device configures two or more SP-RS resource sets for the terminal device, when the network device sends indication information for deactivating an SP-RS resource set, a specific indication is added to indication signaling for deactivation, so that another SP-RS resource set is simultaneously activated or deactivated. Therefore, signaling overheads generated when the network device indicates to switch the SP-RS resource set for the terminal device are reduced, and transmission efficiency is improved.

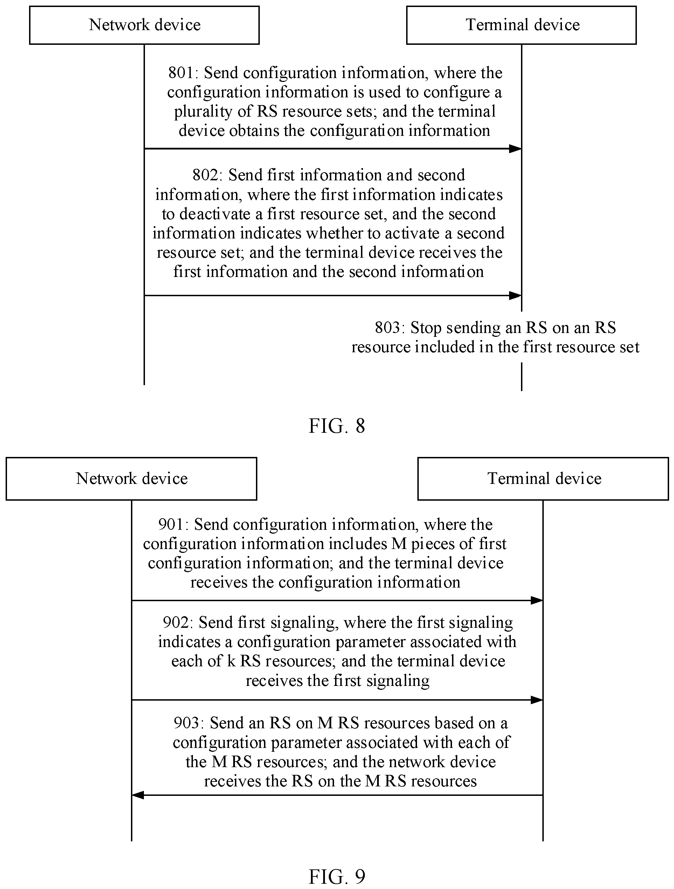

As shown in FIG. 8, the method may include the following steps.

801: The network device sends configuration information, where the configuration information is used to configure a plurality of RS resource sets; and the terminal device obtains the configuration information.

The plurality of RS resource sets configured by using the configuration information include at least a first resource set and a second resource set.

In an implementation, resource types of the first resource set and the second resource set are set to semi-persistent, in other words, both the first resource set and the second resource set are semi-persistent RS resource sets. Alternatively, the resource types of the first resource set and the second resource set are set to be aperiodic or set to periodic.

In an implementation, the configuration information further indicates that usage corresponding to the first resource set and usage corresponding to the second resource set are both set to antenna switching. That is, usage included in the configuration information is set to antennaSwitching.

Further, in an implementation, antenna configurations corresponding to the first resource set and the second resource set are the same. As described above, the antenna configuration is related to a quantity of RS ports and a quantity of RS resources.

Further, in an implementation, a spatial relation corresponding to the first resource set is the same as a spatial relation corresponding to the second resource set. In other words, spatial relations of all RS resources included in the first resource set are associated with spatial relations of all RS resources included in the second resource set. Alternatively, spatial relations of all RS resources included in the first resource set are the same as spatial relations of all RS resources included in the second resource set. Further, the spatial relations of all the RS resources included in the first resource set are the same, the spatial relations of all the RS resources included in the second resource set are the same, and the spatial relation corresponding to the first resource set is the same as the spatial relation corresponding to the second resource set. For an indication manner of the spatial relation, refer to the related descriptions of the foregoing implementation. Details are not described herein again.

The terminal device receives the configuration information from the network device, and may obtain a configuration parameter of the first resource set and a configuration parameter of the second resource set based on the configuration information. For related descriptions of a configuration parameter of a resource set, refer to the implementation shown in FIG. 5. The configuration parameter of the resource set has a same meaning as that in the implementation shown in FIG. 5, and details are not described herein again.

802: The network device sends first information and second information, where the first information indicates to deactivate the first resource set, and the second information indicates whether to activate the second resource set; and the terminal device receives the first information and the second information.

Optionally, the first information and the second information may be in one piece of signaling, for example, first signaling. In other words, the network device sends the first signaling, where the first signaling indicates whether to deactivate the first resource set and whether to activate the second resource set.

In other words, an inactive state of the first resource set is associated with the first signaling, and whether the second resource set is activated is also associated with the first signaling. In other words, the first signaling includes indication information for indicating to deactivate the first resource set, and the first signaling further includes indication information for activating the second resource set, or indication information for not activating the second resource set.

In an implementation, the first signaling may include the first information, and the first information indicates to deactivate the first resource set. When the first information indicates to deactivate the first resource set, the first signaling further includes the second information, where the second information may indicate whether to activate the second resource set.

In an implementation, the second information includes at least one bit, and the at least one bit indicates, in a bitmap manner, that at least one resource set in the plurality of resource sets is activated or not activated. Inactivation means that the resource set is not activated, and a state of the resource set remains an inactive state.

For example, if one of the one or more bits is set to 1, it indicates to activate a resource set associated with the bit; or if one of the one or more bits is set to 0, it indicates to deactivate a resource set associated with the bit. Alternatively, if one of the one or more bits is set to 1, it indicates to deactivate a resource set associated with the bit; or if one of the one or more bits is set to 0, it indicates to activate a resource set associated with the bit.

In an implementation, when the first information indicates to deactivate the first resource set, the first signaling includes a first field, a second field, and a third field. The first field and the second field indicate the first information, the first field indicates a first resource set identity, and the second field indicates to deactivate the first resource set. The third field indicates the second information, and the third field indicates whether to activate the second resource set. For example, when the third field is 1, it indicates to activate the second resource set; or when the third field is 0, it indicates not to activate the second resource set. Alternatively, when the third field is 0, it indicates to activate the second resource set; or when the third field is 1, it indicates not to activate the second resource set.

In an implementation, the configuration information is used to configure the plurality of RS resource sets, and the first resource set in the plurality of RS resource sets is in an active state. The first signaling includes the first field, the second field, and the third field. The first field indicates the first resource set identity, the second field indicates to deactivate the first resource set, and the third field indicates whether to activate an RS resource set other than the first resource set. One or more bits included in the third field indicate, in the bitmap manner, whether to activate the plurality of RS resource sets. The bitmap manner is described above, and details are not described herein again.

In an implementation, the configuration information is used to configure the plurality of RS resource sets, and the first resource set in the plurality of RS resource sets is in the active state. The first signaling includes the first field, the second field, and the third field. The first field indicates usage or a use case, the second field indicates an identity of a resource set included in the use case indicated by the first field, and the third field indicates to activate or deactivate the resource set indicated by the second field. Alternatively, the first field indicates usage or a use case, and the second field indicates to activate or deactivate a resource set corresponding to the usage indicated by the first field. Active/inactive states of resource sets corresponding to different usage are indicated in the bitmap manner, or active/inactive states of different resource sets are indicated in the bitmap manner.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

Correspondingly, in an implementation, if the first information indicates to activate the first resource set, the first signaling further includes fourth information, and the fourth information is carried in at least one reserved bit.

In an implementation, the fourth information may include at least one reserved bit, and the at least one reserved bit is all set to 0. Alternatively, a field length of the fourth information is 0.

In an implementation, a field length of a field included in the fourth information is the same as a field length of a field included in the second information. Alternatively, a quantity of reserved bits included in the fourth information is the same as a quantity of bits included in the third field.

Based on the foregoing implementation, when deactivating an RS resource set is indicated, whether to activate another RS resource set is indicated, and a format of MAC CE signaling does not need to be modified or signaling overheads of a MAC CE need not be increased, thereby ensuring compatibility with an existing protocol.

In an implementation, the first signaling may be carried in the MAC CE, or the first signaling may be specifically a MAC CE. Alternatively, the first signaling may be RRC signaling.

For example, with reference to FIG. 4a and FIG. 4b, the first signaling may be carried in one or more bits of an SP SRS resource set ID field, an A/D field, an R bit, or a newly added bit in the MAC CE. The MAC CE may include the SP SRS resource set ID (SP SRS Resource Set ID) field. The MAC CE further includes the A/D field and the R field, and the R field is usually used as a reserved bit. The reserved bit is set to 0 by default.

The SP SRS resource set ID field indicates the first resource set identity ID. When the A/D field in the MAC CE is set to 0, it indicates that the first information indicates to deactivate the first resource set, and the MAC CE is a deactivation command, in other words, the MAC CE indicates to deactivate the first resource set. In this case, the network device may redefine the R field in the MAC CE to indicate the second information, in other words, redefine the R field to indicate whether to activate the second resource set. For example, the R field may be set to 1 to indicate to activate the second resource set, or the R field may be set to 0 to indicate not to activate the second resource set.

As shown in FIG. 4a and FIG. 4b, the second information may be carried in at least one of a first reserved bit R, a second reserved bit R, or the newly added bit in the MAC CE.

In another implementation, at least one field may alternatively be added to the MAC CE to indicate the second information, where the second information indicates whether to activate the second resource set. For example, a field 1 is added to the MAC CE. When the field 1 is set to 1, it indicates to activate the second resource set; or when the field 1 is set to 0, it indicates not to activate the second resource set.

Further, when more than two semi-persistent RS resource sets are configured by the network device, in other words, in step 801, in addition to being used to configure the semi-persistent first resource set and the semi-persistent second resource set, the configuration information may be further used to configure another semi-persistent RS resource set, for example, a third resource set. In this case, the network device may use a plurality of bits included in the second information in the first signaling as an indication indicating whether to activate the another semi-persistent RS resource set.

Specifically, in the foregoing step 802, the network device sends the first signaling, where the first signaling indicates to deactivate the first resource set, and the first signaling may further indicate whether to activate the RS resource set other than the first resource set.

In an implementation, the first information included in the first signaling indicates to deactivate the first resource set, and the first signaling further includes the second information. That the second information indicates whether to activate the second resource set may be understood as follows: The second information may indicate whether to activate the RS resource set other than the first resource set.

In an implementation, the second information includes the plurality of bits, and the plurality of bits indicate, in the bitmap (bitmap) manner, that the at least one resource set in the plurality of resource sets is activated.

A bitmap means that different bits in the plurality of bits indicate to activate or not to activate different resource sets. For example, a first bit corresponds to the second resource set, and a different value of the first bit corresponds to activating or not activating the second resource set; a second bit corresponds to the third resource set, and a different value of the second bit corresponds to activating or not activating the third resource set; and the rest may be deduced by analogy. An implementation method of the bitmap (bitmap) manner in this embodiment of the present invention is described above, and details are not described again.

In an implementation, when a resource set ID is represented by a numeric value, a resource set ID corresponding to a resource set associated with an $i^{th}$ bit in the plurality of bits is greater than a resource set ID corresponding to a resource set associated with an $(i+1)^{th}$ bit. That is, an association relationship between the plurality of bits and the resource sets is defined in ascending order of resource set IDs. For example, an SRS resource ID associated with a first bit (L0) in L bits is the smallest, an SRS resource ID associated with a second bit (L1) in the L bits is the second smallest, and the rest may be deduced by analogy. Alternatively, a first bit (L0) in L bits is associated with a first resource set in the plurality of resource sets, a second bit (L1) in the L bits is associated with a second resource set in the plurality of resource sets, and the rest may be deduced by analogy.

In an implementation, a resource set ID corresponding to a resource set associated with an $i^{th}$ bit in the plurality of bits is less than a resource set ID corresponding to a resource set associated with an $(i+1)^{th}$ bit. That is, an association relationship between the plurality of bits and the resource sets is defined in descending order of resource set IDs. A descending manner is opposite to the foregoing ascending manner, and details are not described herein again.

In an implementation, a value of each of the plurality of bits is set to 1 to indicate activation, or set to 0 to indicate inactivation. Alternatively, a value of each bit is set to 0 to indicate activation, or set to 1 to indicate inactivation. This is not specifically limited in embodiments of this application.

For example, the second information may include M bits, and each of the M bits is associated with the RS resource set other than the first resource set that is configured by using the configuration information. For example, an $i^{th}$ bit in the M bits indicates whether to activate the second resource set, and a $j^{th}$ bit indicates whether to activate the third resource set. M, i, and j may be positive integers, i is less than or equal to M, and j is less than or equal to M. A value of M may be greater than or equal to a quantity of semi-persistent RS resource sets configured by the network device for the terminal device minus 1.

For example, the network device configures the first resource set, the second resource set, and the third resource set for the terminal device, and the network device sends the MAC CE to the terminal device. The SP SRS resource set ID field in the MAC CE indicates the first resource set identity ID. When the A/D field in the MAC CE is set to 0, the MAC CE indicates to deactivate the first resource set. The second information in the MAC CE may be carried in three bits. A first bit corresponds to the second resource set; a second bit corresponds to the third resource set; and a third bit is a reserved bit, and may be ignored. In this case, the second information is set to 010, to be specific, a value of the first bit is set to 0 to indicate not to activate the second resource set, and a value of the second bit is set to 1 to indicate to activate the third resource set. Therefore, the terminal device may further determine, based on the MAC CE indicating deactivation, whether to activate another RS resource set.

In a possible implementation, only a resource sets in the plurality of resources can be in an active state centralized at a same moment or in a fourth time interval, where a is an integer greater than or equal to 1. For example, a=1. A value of a may be predefined, or may be configured by using a higher layer parameter, or may be reported by the UE, or may be configured based on information reported by the UE. The fourth time interval may be predefined, or may be configured by using the higher layer parameter, or may be reported by the UE, or may be configured based on the information reported by the UE. The fourth time interval is b time units, where b is a positive integer. The time unit may be a slot, a symbol, a frame, a subframe, or a mini-slot. For example, the fourth time interval is one slot.

Based on the foregoing implementation, it can be ensured that only some resource sets are in an activated state within a capability range of the UE. For example, in one slot, only one resource set is in an activated state, which can reduce processing complexity of the terminal device. The UE is allowed to report a or the fourth time interval, which can improve scheduling flexibility.

803: The terminal device stops sending an RS on an RS resource included in the first resource set.

After obtaining the first signaling, the terminal device may determine, based on a specific indication manner in the first signaling, to deactivate the first resource set, and the terminal device stops sending the RS on the RS resource included in the first resource set. In addition, if the second information indicates to activate another RS resource set, the terminal device may further correspondingly activate the corresponding RS resource set based on the second information included in the first signaling, and sends an RS to the network device on an RS resource included in the activated RS resource set.

Specifically, for related descriptions of a slot location in which the terminal device receives the first signaling and a slot location in which the terminal device stops sending the RS on the RS resource included in the first resource set, refer to the implementation shown in FIG. 5. Details are not described herein again.

It should be noted that, before the network device sends the first signaling, to be specific, deactivates the first resource set, the network device has activated the first resource set for the terminal device, and the terminal device may send the RS on the RS resource included in the first resource set. In other words, before sending the first signaling, the network device sends second signaling, where the second signaling indicates to activate the first resource set. The second signaling includes fifth information and sixth information, the fifth information indicates the first resource set identity, and the sixth information indicates to activate an RS resource set indicated by the fifth information. The terminal device receives the second signaling, and sends the reference signal on the RS resource included in the first resource set. Specifically, for a process in which the network device activates the first resource set, refer to the related descriptions in the foregoing embodiment. Details are not described herein again.

Further, for a specific time sequence in which the terminal device obtains the first signaling and stops sending the RS on the RS resource included in the first resource set, refer to the related description in the foregoing implementation that the terminal device obtains the first signaling and stops sending a second RS. Details are not described herein again.

In the foregoing implementation, the network device may add a specific indication to the indication information for deactivating the semi-persistent RS resource set, so that the same indication information may further indicate whether to activate the RS resource set other than the activated RS resource set. Therefore, signaling overheads of switching an active state of the RS resource set by the network device for the terminal device can be reduced, and time required for switching the active state of the RS resource set can be further shortened, thereby improving communication efficiency.

In another implementation, for the foregoing embodiment, when the first signaling sent by the network device to the terminal device indicates to deactivate a first SRS resource set, the first signaling may further indicate a spatial relation of the second SRS resource set.

Specifically, in step 802, the network device sends the first signaling. When the first information indicates to deactivate the first resource set, the first signaling further includes the second information, where the second information may indicate whether to activate the second resource set.

Further, when the second information indicates to activate the second resource set, the first signaling may further include the third information, where the tenth information indicates a spatial relation of the second resource set.

In other words, the first signaling includes the third information, for example, at least one field Y indicating a spatial relation. When the first information in the first signaling indicates to activate the first resource set, the at least one field Y may indicate a spatial relation of the first resource set. When the first information indicates to deactivate the first resource set, the at least one field Y may indicate the spatial relation of the second resource set. Alternatively, when the first information indicates to deactivate the first resource set, the at least one field Y may indicate a spatial relation of at least one second resource set.

In the foregoing implementation, indication information indicating a spatial relation of an RS resource in an RS resource set is added to the indication information that is for deactivating the first SRS resource set and that is sent by the network device to the terminal device, so that spatial relations of SRSs in a same antenna configuration can be the same, and no dedicated signaling indication is required. Signaling overheads are reduced. It is ensured that the spatial relations of the SRSs in the same antenna configuration are the same, so that accuracy of channel information estimation can be improved, and system communication quality can be improved.

In an implementation, before step 801, the terminal device may further report capability information to the network device. The capability information may indicate that a maximum quantity of RS resource sets that are simultaneously in an active state and that are supported by the terminal device is P, where P is a positive integer greater than or equal to 1.

In an optional implementation, if the quantity P of RS resource sets that are simultaneously in the active state and that are supported by the terminal device is equal to 1, the first information indicates to deactivate the first resource set, and the second information indicates to activate the second resource set. In this case, the first resource set is deactivated, and only the second resource set is in an active state.

In an optional implementation, if the quantity P of RS resource sets that are simultaneously in the active state and that are supported by the terminal device is greater than 1, the first information indicates to deactivate the first resource set, and the second information indicates to activate the second resource set. In this case, the first resource set is deactivated, and the plurality of RS resource sets including the second resource set may be in an active state.

In addition, an embodiment of this application further provides a communication method, applied to reference signal transmission between a network device and a terminal device. When the network device configures, for the terminal device, one semi-persistent RS resource set used for antenna switching (in addition, at least one aperiodic or periodic RS resource set may be configured), based on an indication of the network device, a resource used by the terminal device to send an RS is staggered from another terminal device in time domain, thereby reducing a probability of RS resource collision between different terminal devices, and improving transmission efficiency.

As shown in FIG. 9, the method may include the following steps.

901: The network device sends configuration information, where the configuration information includes M pieces of first configuration information; and the terminal device receives the configuration information.

Each piece of first configuration information corresponds to one RS resource, M RS resources correspond to the M pieces of first configuration information, and the M RS resources may be resources in one RS resource set.

It should be noted that the first configuration information in this embodiment of this application is RS resource configuration information. The first configuration information includes one or more configuration parameters associated with the RS resource, and only one configuration parameter is a configuration parameter used by the RS resource, namely, a configuration parameter used by the terminal device to send the RS. Different RS resources correspond to different first configuration information. Specifically, the first configuration information may include the configuration parameter of the RS resource, for example, a time domain configuration parameter, a frequency domain configuration parameter, a port configuration parameter, a modulation and coding scheme (modulation and coding scheme, MCS), and/or an RS sequence configuration parameter.

The M RS resources in the configuration information may include the following two types of RS resources. For a first type of RS resource, first configuration information corresponding to each RS resource includes a plurality of configuration parameters. For example, the configuration parameter may include a time domain periodicity and/or a time domain offset value. In other words, two or more time domain characteristics are configured for the first type of RS resource. When the network device activates the RS resource set by using an activation indication, the network device may, by using a further indication, enable the terminal device to determine a time domain resource location used for sending the RS.

For a second type of RS resource, first configuration information corresponding to each RS resource includes only one configuration parameter. For example, when the configuration parameter includes a time domain periodicity and/or a time domain offset value, the RS resource corresponds to a time domain characteristic. When the network device activates the RS resource set by using an activation indication, the terminal device may send an RS at a specific time domain resource location corresponding to the RS resource (without a further indication), namely, a time domain resource location used for sending the RS.

In an implementation, k pieces of first configuration information exist in the M pieces of first configuration information, and k RS resources are first type of RS resources. The k pieces of first configuration information correspond to the k RS resources, and each of the k pieces of first configuration information includes a plurality of configuration parameters.

In other words, each of the k pieces of first configuration information corresponding to the k RS resources corresponds to the plurality of configuration parameters. Therefore, the configuration parameter needs to be indicated by using first signaling, and it is determined, based on the first signaling, that one of the plurality of configuration parameters is a configuration parameter for sending the RS, or it is determined, based on the first signaling, that one of the plurality of configuration parameters is a configuration parameter associated with the RS resource.

In addition, M-k pieces of first configuration information exist in the M pieces of first configuration information, and M-k RS resources are second type of RS resources. The M-k pieces of first configuration information correspond to the M-k RS resources, and each of the M-k pieces of first configuration information includes one configuration parameter. A configuration parameter associated with each of the M-k RS resources is a configuration parameter included in first configuration information corresponding to the RS resource, a configuration parameter for sending the RS, or a configuration parameter associated with the RS resource.

k is an integer greater than 0 and less than or equal to M, and M is a positive integer. When k=M, each of the M pieces of first configuration information corresponding to the M RS resources includes a plurality of configuration parameters.

In an implementation, the configuration information is used to configure one RS resource set, and the RS resource set includes the M RS resources. For example, the configuration information is used to configure a first resource set. When M=3, the first RS resource set includes three RS resources, a first RS resource, a second RS resource, and a third RS resource. When k=2, each of first configuration information corresponding to the first RS resource and first configuration information corresponding to the second RS resource includes two configuration parameters. For example, the first configuration information corresponding to the first RS resource includes a first configuration parameter and a second configuration parameter, and the first configuration information corresponding to the second RS resource includes a third configuration parameter and a fourth configuration parameter. The configuration parameters included in the first RS resource may be the same as or different from the configuration parameters included in the second RS resource. First configuration information corresponding to the third RS resource includes one configuration parameter.

In addition, when M=k, the M RS resources in the configuration information include only the first type of RS resources. The M pieces of first configuration information correspond to the M RS resources, and each of the M pieces of first configuration information includes the plurality of configuration parameters. For example, first configuration information corresponding to each RS resource includes two or more configuration parameters.

In an implementation, a plurality of configuration parameters included in the first configuration information corresponding to each RS resource indicate a periodicity value and/or a time domain offset value, and the plurality of configuration parameters are different from each other.

In other words, the network device configures at least two different sets of time domain configuration parameters for the RS resource.

For example, the configuration information may include the first configuration parameter and the second configuration parameter that correspond to the first RS resource. The first configuration parameter includes a first periodicity value and a first time domain offset value, and the second configuration parameter includes a second periodicity value and a second time domain offset value. The first periodicity value is different from the second periodicity value, or the first time domain offset value is different from the second time domain offset value. Alternatively, the first periodicity value is different from the second periodicity value, and the first time domain offset value is different from the second time domain offset value.

In an implementation, the configuration information is used to configure the first resource set, the first resource set is used for antenna switching, and a resource type of the first resource set is set to semi-persistent. The first RS resource belongs to the first resource set, and the first resource set includes at least the first RS resource.

The terminal device stores, based on the configuration information, the M pieces of first configuration information corresponding to the M RS resources, and the at least one configuration parameter included in each piece of first configuration information. For example, if first configuration information corresponding to an RS includes a plurality of configuration parameters, and each configuration parameter corresponds to one configuration parameter index, the terminal device also records a correspondence between each configuration parameter and the configuration parameter index.

902: The network device sends the first signaling, where the first signaling indicates a configuration parameter associated with each of the k RS resources; and the terminal device receives the first signaling.

Herein, the configuration parameter associated with the RS resource is a configuration parameter for sending the RS on the RS resource.

In an implementation, the first signaling includes a first field. When the first field indicates a first index, a configuration parameter index associated with each of the k RS resources is the first index; or when the first field indicates the first configuration parameter, the configuration parameter associated with each of the k RS resources is the first configuration parameter.

In other words, the first field in the first signaling indicates the configuration parameter indexes associated with the k RS resources, or indicates that all the configuration parameters associated with the k RS resources are first configuration parameters.

For example, in the foregoing embodiment, the first configuration parameter is the same as the third configuration parameter, the second configuration parameter is the same as the fourth configuration parameter, and configuration parameters associated with the first RS resource and the second RS resource are both first configuration parameters, or are both second configuration parameters.

Alternatively, a configuration parameter is determined by using a configuration parameter index, and a configuration parameter included in each piece of first configuration information corresponds to an index. For example, if the first configuration parameter and the third configuration parameter correspond to the first index, and the second configuration parameter and the fourth configuration parameter correspond to a second index, when the first field included in the first signaling indicates the first index, the configuration parameter associated with the first RS resource is the first configuration parameter, and the configuration parameter associated with the second RS resource is the third configuration parameter.

The first configuration parameter may be one of the at least two configuration parameters allocated by the network device to the RS resource in the foregoing step 901. Therefore, the network device sends the first signaling to the terminal device, to indicate, to the terminal device, the first configuration parameter corresponding to the first RS resource.

In an implementation, the first signaling may be carried in a MAC CE, or the first signaling may be specifically a MAC CE. The first field may be carried in at least one of an R bit or a newly added bit in the MAC CE, and indicate a configuration parameter of the first RS resource or an index corresponding to a configuration parameter.

For example, with reference to the formats of the MAC CE signaling shown in FIG. 4a and FIG. 4b, the first signaling may be carried in one or more bits of an SP SRS resource set ID field, an A/D field, an R bit, or a newly added bit in the MAC CE. The SP SRS resource set ID field in the MAC CE indicates a first resource set identity ID. When the A/D field in the MAC CE is set to 1, it indicates activation, in other words, the MAC CE indicates to activate the first resource set. When the R field in the MAC CE is set to 1, it indicates the first configuration parameter. When the R field in the MAC CE is set to 0, it indicates the second configuration parameter.

In an implementation, the first RS resource belongs to the first resource set, and the first resource set may include a plurality of RS resources. At least two configuration parameters are configured for each RS resource, and one of the at least two configuration parameters of each RS resource corresponds to a first index.

In other words, the at least two configuration parameters are configured for each of the plurality of RS resources included in the first resource set. The network device may indicate a same configuration parameter for the plurality of RS resources in the first resource set by using the first field in the first signaling, or indicate one of the at least two configuration parameters for each of the plurality of RS resources.

For example, the first field may include one bit, where the bit indicates that the plurality of RS resources in the first resource set all correspond to the same configuration parameter or a same configuration parameter index. For example, when the first resource set includes the first RS resource and the second RS resource, it indicates that both the first RS resource and the second RS resource correspond to the first configuration parameter when the first field is set to 1.

Alternatively, the first field may include two bits, where the bits indicate that the plurality of RS resources in the first resource set correspond to the same configuration parameter. For example, when the first resource set includes the first RS resource and the second RS resource, and the configuration information includes the first configuration parameter, the second configuration parameter, and the third configuration parameter, it indicates that both the first RS resource and the second RS resource correspond to the third configuration parameter when the first field is set to 10.

In an implementation, the first signaling includes a second field, and the second field includes at least k bits. The at least k bits indicate, in a bitmap manner, the configuration parameter associated with each of the k RS resources;

or the at least k bits indicate, in a bitmap manner, the configuration parameter index associated with each of the k RS resources. The k bits and the k RS resources are associated in the foregoing ascending or descending manner, and details are not described herein again.

It should be noted that, in this embodiment of the present invention, association is equivalent to a correspondence.

In other words, the second field includes the k bits, and a value of one of the k bits indicates a configuration parameter or a configuration parameter index associated with an RS resource corresponding to the bit.

In other words, the network device may indicate one of the at least two configuration parameters for each of the plurality of RS resources in the first resource set by using a plurality of bits in the second field in the first signaling.

Further, in an implementation, an RS resource ID of an RS resource corresponding to an $i^{th}$ bit in the k bits is less than an RS resource ID of an RS resource corresponding to an $(i+1)^{th}$ bit, where i is a positive integer.

Alternatively, in an implementation, an RS resource ID of an RS resource corresponding to an $i^{th}$ bit in the k bits is greater than an RS resource ID of an RS resource corresponding to an $(i+1)^{th}$ bit, where i is a positive integer.

In an implementation, the first RS resource belongs to the first resource set, the first resource set includes the plurality of RS resources, the second field includes the plurality of bits, and each of the plurality of bits is associated with one RS resource in the first resource set.

For example, the second field may include two bits, where the bits indicate configuration parameters respectively corresponding to two RS resources in the first resource set. For example, when the first resource set includes the first RS resource and the second RS resource, a first bit in the second field is associated with the first RS resource, and a second bit in the second field is associated with the second RS resource. When the first configuration information corresponding to the first/second RS resource each includes the first configuration parameter and the second configuration parameter, a bit setting to 0 corresponds to the first configuration parameter, and a bit setting to 1 corresponds to the second configuration parameter. In this case, when the second field is set to 10, it may indicate that the first RS resource corresponds to the second configuration parameter, and the second RS resource corresponds to the first configuration parameter.

In an implementation, if the first resource set includes the M RS resources, the second field may include N bits, where M and N are positive integers, and N is greater than or equal to M.

In other words, M bits in the N bits in the second field one-to-one correspond to the M RS resources. When N is greater than M, N-M reserved bits exist in the second field, and a MAC entity of the terminal device may ignore the last N-M reserved bits.

In another implementation, the first signaling may indicate a specific configuration parameter corresponding to the first RS resource, for example, may include at least one of a periodicity value or a time domain offset value.

903: The terminal device sends the RS on the M RS resources based on the configuration parameter associated with each of the M RS resources; and the network device receives the RS on the M RS resources.

Specifically, after obtaining the first signaling, the terminal device may determine, based on the first signaling, the configuration parameter associated with each of the M RS resources. Configuration parameters associated with the two types of RS resources in the M RS resources, namely, configuration parameters associated with the k RS resources and the configuration parameters associated with M-k RS resources, need to be determined separately.

In an implementation, the first signaling includes the first field. When the first field indicates the first index, the configuration parameter index associated with each of the k RS resources is the first index; or when the first field indicates the first configuration parameter, the configuration parameter associated with each of the k RS resources is the first configuration parameter.

In other words, the terminal device may determine, based on the first field in the first signaling, the configuration parameter associated with each of the k RS resources in the M RS resources, or the configuration parameter index.

Alternatively, in another implementation, the first signaling includes the second field, and the second field includes the at least k bits. The at least k bits indicate, in the bitmap manner, the configuration parameter associated with each of the k RS resources; or the at least k bits indicate, in the bitmap manner, the configuration parameter index associated with each of the k RS resources.

In other words, the terminal device may determine, based on the second field in the first signaling and based on a value of the $i^{th}$ bit in the second field corresponding to the k RS resources in the M RS resources, the configuration parameter associated with each RS resource, or the configuration parameter index.

For the M-k RS resources in the M RS resources, after the terminal device receives the first signaling indicating to activate the RS resource set, the terminal device may determine, based on the configuration information recorded in the foregoing step 901, the configuration parameters in the first configuration information corresponding to the M-k RS resources.

Then, the terminal device may send the RS on the M RS resources based on the configuration parameter associated with each of the M RS resources.

For example, after the terminal device receives, in a slot n, a PDSCH that carries a command for activating a first SP SRS resource set, the terminal device sends, in the slot n, a PUCCH that carries HARQ-ACK information. The terminal device starts to apply, in a first slot after a slot $n + 3N_{slot}^{subframe,\mu}$ , an assumption for sending an SRS configured by using the first SRS resource set. A time domain periodicity and a time domain offset value that are used for sending the SRS are determined based on a configuration parameter that is associated with a first SRS resource in the first SP SRS resource set and that is indicated by the first field or the second field in the first signaling.

In the foregoing implementation, when the network device configures only one SP-RS resource set for the terminal device, the network device adds an indication of the configuration parameter corresponding to the RS resource to indication for activating the RS resource set, so that the resource for sending the RS by the terminal device is staggered from the resource for sending the RS by the another terminal device in time domain. Therefore, the probability of RS resource collision between different terminal devices is reduced, and transmission efficiency is improved. In addition, because the network device configures only one SP-RS resource set for the terminal device, compared with configuring at least two SP-RS resource sets, the terminal device needs to store information about only the SP-RS resource set, so that storage costs of the terminal device can be effectively reduced.

In a possible implementation, an RS resource collision problem may be further resolved based on a predefined rule or a configuration of the network device. The configuration information sent by the network device is used to configure the RS resource sets, and the configuration information includes information about a plurality of RS resources.

In an implementation, the terminal device obtains second signaling, determines at least one first RS resource of the plurality of RS resources based on the second signaling, and sends the RS on the at least one first RS resource.

Alternatively, in another implementation, the terminal device sends the RS on at least one first RS resource, and the terminal device sends third signaling to the network device, where the third signaling indicates the at least one first RS resource.

Alternatively, in another implementation, the terminal device sends the RS on at least one first RS resource according to the predefined rule. The predefined rule may be that when resource collision occurs, the at least one first RS resource is determined in a manner in which a smaller RS resource ID indicates a higher priority.

The network device determines the at least one first RS resource based on the third signaling, and receives the RS on the at least one first RS resource.

The second signaling may be RRC signaling, MAC CE signaling, or DCI.

Based on the foregoing implementation, when an RS resource collision occurs between different UEs, or when a collision occurs between different RS resources of different usage used by same UE, or when a collision occurs between different RS resources of different resource types used for same UE, it can be ensured that, an RS resource that can be used for RS sending exists according to the predefined rule or based on the configuration of the network device, to ensure that no resource is wasted.

Based on any one of the foregoing implementations, the terminal device may send an indication of a quantity of multiple input multiple output (multiple input multiple output, MIMO) layers of the device or an indication of a quantity of receive branches (RX branches) to the network device. In this way, the network device determines the quantity of MIMO layers or the quantity of receive branches based on the corresponding indication, thereby simplifying processing complexity of performing content parsing by the network device.

In a possible implementation, the terminal device sends fourth signaling, where the fourth signaling may indicate a capability of the terminal device. The fourth signaling may be RRC signaling.

A specific implementation is as follows: If the fourth signaling does not include first indication information, the quantity of multiple input multiple output (multiple input multiple output, MIMO) layers or the quantity of receive branches (RX branches) of the terminal device is a first value. If the fourth signaling includes first indication information, the quantity of MIMO layers or the receive branch of the terminal device is a second value. For example, the first value is a predefined integer. For example, the first value is 1. For example, the second value is a predefined integer. For example, the second value is 2.

Another specific implementation is as follows: The fourth signaling does not include first indication information, and the quantity of MIMO layers or the quantity of receive branches (RX branches) of the terminal device is a first value. If the fourth signaling includes first indication information, the terminal device reports the quantity of MIMO layers or the quantity of receive branches by using the first indication information. For example, the first value is a predefined integer. For example, the first value is 1. For example, the first indication information indicates the quantity of MIMO layers or the quantity of receive branches of the UE in a value set {2, 4, 8, 6}.

Another specific implementation is as follows: If the fourth signaling includes first indication information, the terminal device reports the quantity of MIMO layers or the quantity of receive branches by using the first indication information. For example, the first value is a predefined integer. For example, the first indication information indicates the quantity of MIMO layers or the quantity of receive branches of the UE in a value set {2, 4, 8, 6} or {2, 4, 8, 1}.

The quantity of MIMO layers of the terminal device may be a maximum quantity of MIMO layers supported by the terminal device. The receive branch of the terminal device may be a maximum quantity of receive branches supported by the terminal device. For example, the first indication information is downlink MIMO Layer information. For example, the value set is {2, 4, 8, 6}, or {2, 4, 8, 1}, or {2, 4, 8}, or {1, 2, 4}, or {1, 2}.

The following uses an example in which the first indication information is MIMO-LayersDL to describe an advantage that a MIMO layer value set is {twoLayers, fourLayers, eightLayers, sixLayers} or {twoLayers, fourLayers, eightLayers, oneLayer}. For existing UE or UE of an earlier version, a MIMO layer value set is {twoLayers, fourLayers, eightLayers}. The UE reports the MIMO layer value by using bits (for example, two bits). There is a correspondence between a bit status and each element in the MIMO layer value set. In this way, a base station may determine, based on the received bit status, the MIMO layer value reported by the UE. For new UE or UE supporting a new MIMO layer value, if the existing first indication information (structure or form) is reused, the new MIMO layer value needs to be located behind an existing element in the MIMO layer value set.

For example, if the original MIMO layer value set is {twoLayers, fourLayers, eightLayers} and the new MIMO layer value is 1, a MIMO layer value set of UE supporting the MIMO layer value 1 is {twoLayers, fourLayers, eightLayers, oneLayer}. For another example, if the original MIMO layer value set is {twoLayers, fourLayers, eightLayers}, and the new MIMO layer value is 6, a MIMO layer value set of UE supporting the MIMO layer value 6 is {twoLayers, fourLayers, eightLayers, sixLayers}.

In this way, the base station may parse, based on a set of correspondences between bit statuses and MIMO layer values, MIMO layers reported by UEs of different (versions), thereby ensuring backward compatibility with the UE of the earlier version, simplifying content parsing of the base station, and reducing implementation complexity.

The following further describes, by using a specific example, an advantage that the new MIMO layer value in the foregoing set is located behind the existing element in the MIMO layer value set. It is assumed that there are two UEs: UE 1 and UE 2. The UE 1 is UE of the earlier version, and a quantity of MIMO layers supported by the UE 1 may be 2, 4, or 8. The UE 2 is UE of a new version, and a quantity of MIMO layers supported by UE 2 may be 1 or 2. The UE 1 indicates, based on the first indication information and a correspondence in Table 2, the quantity of MIMO layers supported by the UE 1. The UE 2 indicates, based on the first indication information and a correspondence in Table 3, the quantity of MIMO layers supported by the UE 2. For the base station that receives the fourth signaling, the base station can parse the MIMO layer values of the UE 1 and the UE 2 of different versions only based on the correspondence in Table 3, thereby ensuring backward compatibility with the UE of the earlier version, simplifying content parsing of the base station, and reducing implementation complexity.

**Table 2 Correspondence between a bit status of the first indication information and a quantity of MIMO layers**

| Bit status of the first indication information | Quantity of MIMO layers |
|---|---|
| 00 | 2 |
| 01 | 4 |
| 10 | 8 |

**Table 3 Correspondence between a bit status of the first indication information and a quantity of MIMO layers**

| Bit status of the first indication information | Quantity of MIMO layers |
|---|---|
| 00 | 2 |
| 01 | 4 |
| 10 | 8 |
| 11 | 1 |

In a possible implementation, the network device receives the fourth signaling sent by the user equipment. The quantity of layers does not include the first indication information, and the network device determines that the quantity of MIMO layers or the quantity of receive branches (RX branches) of the terminal device is the first value. The quantity of layers includes the first indication information, and the network device determines that the quantity of MIMO layers or the receive branch of the terminal device is the second value, or the network device determines that the quantity of MIMO layers or the receive branch of the terminal device is the second value based on an indication of the first indication information.

The quantity of MIMO layers of the terminal device may be the maximum quantity of MIMO layers supported by the terminal device. The receive branch of the terminal device may be a maximum quantity of receive branches supported by the terminal device. For example, the first indication information is the downlink MIMO Layer information. The first value is a predefined integer. For example, the first value is 1, or the first value is 6. The second value is predefined, or the second value is indicated in a MIMO layer value set, or the second value is reported in a MIMO layer value set. For example, the second value is 2. For example, the MIMO value set is {2, 4, 8, 6}, {2, 4, 8, 1}, {2, 4, 8}, {1, 2, 4}, or {1, 2}.

An example in which the first indication information is the MIMO-LayersDL is used. The advantage that the MIMO layer value set is {twoLayers, fourLayers, eightLayers, sixLayers} or {twoLayers, fourLayers, eightLayers, one-Layer} is described above, and details are not described herein again.

Content indicated by the MAC CE is associated with a capability reported by the UE.

Based on the foregoing implementations, this application further provides a communication apparatus, configured to perform the steps performed by the terminal device in the foregoing implementations. The communication apparatus may include a receiving module and a processing module.

The receiving module is configured to obtain configuration information, where the configuration information is used to configure N reference signal RS resource sets, and N is an integer greater than 1.

The receiving module is further configured to obtain first signaling, where the first signaling includes a first field. When the first field is a first value, the first field indicates to activate M RS resource sets in the N RS resource sets. When the first field is a second value, the first field indicates to deactivate K RS resource sets in the N RS resource sets. M is a positive integer not greater than N, and K is a positive integer not greater than N.

The processing module is configured to determine an activated resource set and/or a deactivated RS resource set in the N RS resource sets based on the first signaling.

In a possible implementation, the first field indicates to activate the M RS resource sets in the N RS resource sets, and the remaining N-M RS resource sets in the N RS resource sets other than the M RS resource sets are inactive resource sets.

In a possible implementation, the first field indicates to activate the M RS resource sets in the N RS resource sets, the first signaling further includes an RS resource set identity field, and the RS resource set identity field indicates the M RS resource sets.

In a possible implementation, the first field indicates to deactivate the K RS resource sets in the N RS resource sets, the first signaling does not include an RS resource set identity field or the first signaling further includes an RS resource set identity field, and one or more bits in the RS resource set identity field are reserved bits.

In a possible implementation, N=2, and M=1; and/or K=N.

In a possible implementation, the terminal device reports capability information to a network device, where the capability information indicates whether the terminal device supports determining the activated resource set and/or the deactivated RS resource set in the N RS resource sets based on the first signaling.

Correspondingly, this application further provides a communication apparatus, configured to perform the steps performed by the network device in the foregoing implementations. The apparatus includes a sending module.

The sending module is configured to send configuration information, where the configuration information is used to configure N reference signal RS resource sets, and N is an integer greater than 1.

The sending module is further configured to send first signaling, where the first signaling includes a first field. When the first field is a first value, the first field indicates to activate M RS resource sets in the N RS resource sets. When the first field is a second value, the first field indicates to deactivate K RS resource sets in the N RS resource sets. M is a positive integer not greater than N, and K is a positive integer not greater than N.

In a possible implementation, the first field indicates to activate the M RS resource sets in the N RS resource sets, and the remaining N-M RS resource sets in the N RS resource sets other than the M RS resource sets are inactive resource sets.

In a possible implementation, the first field indicates to activate the M RS resource sets in the N RS resource sets, the first signaling further includes an RS resource set identity field, and the RS resource set identity field indicates the M RS resource sets.

In a possible implementation, the first field indicates to deactivate the K RS resource sets in the N RS resource sets, the first signaling does not include an RS resource set identity field or the first signaling further includes an RS resource set identity field, and one or more bits in the RS resource set identity field are reserved bits.

In a possible implementation, N=2, and M=1; and/or K=N.

In a possible implementation, capability information reported by a terminal device is received, where the capability information indicates whether the terminal device supports determining an activated resource set and/or a deactivated RS resource set in the N RS resource sets based on the first signaling.

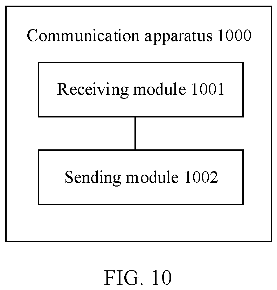

Based on the foregoing implementations, this application further provides a communication apparatus, configured to perform the steps performed by the terminal device in the foregoing implementations. As shown in FIG. 10, a communication apparatus 1000 may include a receiving module 1001 and a sending module 1002.

The receiving module 1001 is configured to obtain configuration information, where the configuration information is used to configure a plurality of reference signal RS resource sets, and the plurality of RS resource sets includes at least a first resource set and a second resource set.

The receiving module 1001 is further configured to obtain first signaling, where the first signaling indicates to activate the second resource set, and the first resource set is deactivated when the second resource set is activated.

The sending module 1002 is configured to send a first RS on an RS resource included in the second resource set.

In a possible implementation, resource types of the first resource set and the second resource set are set to semi-persistent.

In a possible implementation, the first signaling includes first information and second information, the first information indicates a second resource set identity, and the second information indicates to activate the RS resource set indicated by the first information.

In a possible implementation, the receiving module 1001 is further configured to obtain second signaling, where the second signaling indicates to activate the first resource set. The second signaling includes third information and fourth information, the third information indicates a first resource set identity, and the fourth information indicates to activate an RS resource set indicated by the third information. The sending module 1002 is further configured to send a second RS on an RS resource included in the first resource set.

In a possible implementation, the sending module 1002 is further configured to stop sending the second RS on the RS resource included in the first resource set.

In a possible implementation, the sending module 1002 is further configured to obtain the first signaling in a first time unit. The sending module is specifically configured to: stop sending the second RS starting from a time unit after a first time interval elapses in the first time unit; and/or send the first RS starting from a time unit after a second time interval elapses in the first time unit.

In a possible implementation, the sending module 1002 is further configured to report capability information to a network device, where the capability information indicates that a quantity of RS resource sets that are simultaneously in an active state and that are supported by the terminal device is 1, or the capability information indicates that the terminal device supports deactivation of the first resource set when the second resource set is activated.

Correspondingly, this application further provides a communication apparatus, configured to perform the steps performed by the network device in the foregoing implementations. As shown in FIG. 10, a communication apparatus 1000 includes a sending module 1002 and a receiving module 1001.

The sending module 1002 is configured to send configuration information, where the configuration information is used to configure a plurality of reference signal RS resource sets, and the plurality of RS resource sets include at least a first resource set and a second resource set.

The sending module 1002 is further configured to send first signaling, where the first signaling indicates to deactivate the first resource set when the second resource set is activated.

The receiving module 1001 is configured to receive a first RS on an RS resource included in the second resource set.

In a possible implementation, resource types of the first resource set and the second resource set are set to semi-persistent.

In a possible implementation, the first signaling includes first information and second information, the first information indicates a second resource set identity, and the second information indicates to activate the RS resource set indicated by the first information.

In a possible implementation, the sending module 1002 is further configured to send second signaling, where the second signaling indicates to activate the first resource set. The second signaling includes third information and fourth information, the third information indicates a first resource set identity, and the fourth information indicates to activate an RS resource set indicated by the third information.

The receiving module 1001 is further configured to receive a second RS on an RS resource included in the first resource set.

In a possible implementation, the receiving module 1001 is further configured to stop receiving the second RS on the RS resource included in the first resource set.

In a possible implementation, the sending module 1002 is further configured to send the first signaling in a first time unit. The receiving module 1001 is specifically configured to: stop receiving the second RS starting from a time unit after a first time interval elapses in the first time unit; and/or receive the first RS starting from a time unit after a second time interval elapses in the first time unit.

In a possible implementation, the receiving module 1001 is further configured to receive capability information from a terminal device, where the capability information indicates that a quantity of RS resource sets that are simultaneously in an active state and that are supported by the terminal device is 1, or the capability information indicates that the terminal device supports deactivation of the first resource set when the second resource set is activated.

Based on the foregoing implementations, this application further provides a communication apparatus, configured to perform the steps performed by the terminal device in the foregoing implementations. As shown in FIG. 10, a communication apparatus 1000 includes a receiving module 1001.

The receiving module 1001 is configured to obtain configuration information, where the configuration information is used to configure a first reference signal RS resource set and a second resource set.

The receiving module 1001 is further configured to obtain first signaling, where the first signaling includes first information and second information, the first information indicates to deactivate the first resource set, and the second information indicates whether to activate the second resource set.

In a possible implementation, resource types of the first resource set and the second resource set are set to semi-persistent.

In a possible implementation, the second information includes one bit, and the bit is set to 1 to indicate activation or the bit is set to 0 to indicate deactivation.

In a possible implementation, at least one bit is set to 1 to indicate activation or the bit is set to 0 to indicate deactivation or inactivation.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

Correspondingly, this application further provides a communication apparatus, configured to perform the steps performed by the network device in the foregoing implementations. As shown in FIG. 10, a communication apparatus 1000 includes a sending module 1002.

The sending module 1002 is configured to send configuration information, where the configuration information is used to configure a first reference signal RS resource set and a second resource set.

The sending module 1002 is further configured to send first signaling, where the first signaling includes first information and second information, the first information indicates to deactivate the first resource set, and the second information indicates whether to activate the second resource set.

In a possible implementation, resource types of the first resource set and the second resource set are set to semi-persistent.

In a possible implementation, the second information includes at least one bit, and the at least one bit indicates, in a bitmap manner, that at least one resource set in a plurality of resource sets is activated or deactivated.

In a possible implementation, the at least one bit is set to 1 to indicate activation or the bit is set to 0 to indicate deactivation or inactivation.

In a possible implementation, the first signaling further includes third information, where the third information indicates a spatial relation. If the first information indicates to activate the first resource set, the spatial relation indicated by the third information is a spatial relation of an RS resource in the first resource set. If the first information indicates to deactivate the first resource set, the spatial relation indicated by the third information is a spatial relation of an RS resource in the second resource set.

In any one of the foregoing implementations, in a possible implementation, the configuration information further indicates that usage corresponding to the first resource set and usage corresponding to the second resource set are both set to antenna switching.

In any one of the foregoing implementations, in a possible implementation, the first resource set and the second resource set are associated with a same antenna configuration.

In any one of the foregoing implementations, in a possible implementation, the first resource set and the second resource set correspond to a same spatial relation.

In any one of the foregoing implementations, in a possible implementation, the configuration information is carried in radio resource control RRC signaling.

Based on the foregoing implementations, this application further provides a communication apparatus, configured to perform the steps performed by the terminal device in the foregoing implementations. As shown in FIG. 10, a communication apparatus 1000 includes a sending module 1002 and a receiving module 1001.

The receiving module 1001 is configured to obtain configuration information. Resource set configuration information includes M pieces of first configuration information, k pieces of first configuration information exist in the M pieces of first configuration information, the k pieces of first configuration information correspond to k reference signal RS resources, and each of the k pieces of first configuration information includes a plurality of configuration parameters. M-k pieces of first configuration information exist in the M pieces of first configuration information, the M-k pieces of first configuration information correspond to M-k RS resources, and each of the M-k pieces of first configuration information includes one configuration parameter. A configuration parameter associated with each of the M-k RS resources is a configuration parameter included in first configuration information corresponding to the RS resource.

The receiving module 1001 is further configured to: obtain first signaling; and determine, based on the first signaling, a configuration parameter associated with each of the k RS resources, or determine, based on the first signaling, an index of a configuration parameter associated with each of the k RS resources.

The sending module 1002 is configured to send an RS on M RS resources based on a configuration parameter associated with each of the M RS resources. k is an integer greater than 0 and less than or equal to M, and M is a positive integer.

In a possible implementation, the first signaling includes a first field. When the first field indicates a first index, the configuration parameter index associated with each of the k RS resources is the first index; or when the first field indicates a first configuration parameter, the configuration parameter associated with each of the k RS resources is the first configuration parameter.

In a possible implementation, the first signaling includes a second field, and the second field includes at least k bits. The at least k bits indicate, in a bitmap manner, the configuration parameter associated with each of the k RS resources; or the at least k bits indicate, in a bitmap manner, the configuration parameter index associated with each of the k RS resources, where k is an integer greater than or equal to 1.

In a possible implementation, an RS resource ID of an RS resource corresponding to an $i^{th}$ bit in the at least k bits is less than an RS resource ID of an RS resource corresponding to an $(i+1)^{th}$ bit, where i is a positive integer.

In a possible implementation, a plurality of configuration parameters included in first configuration information corresponding to each RS resource indicate a periodicity value and/or a time domain offset value of the RS resource.

Correspondingly, this application further provides a communication apparatus, configured to perform the steps performed by the network device in the foregoing implementations. As shown in FIG. 10, a communication apparatus 1000 includes a sending module 1002 and a receiving module 1001.

The sending module 1002 is configured to send configuration information. Resource set configuration information includes M pieces of first configuration information, k pieces of first configuration information exist in the M pieces of first configuration information, the k pieces of first configuration information correspond to k reference signal RS resources, and each of the k pieces of first configuration information includes a plurality of configuration parameters. M-k pieces of first configuration information exist in the M pieces of first configuration information, the M-k pieces of first configuration information correspond to M-k RS resources, and each of the M-k pieces of first configuration information includes one configuration parameter. A configuration parameter associated with each of the M-k RS resources is a configuration parameter included in first configuration information corresponding to the RS resource.

The sending module 1002 is further configured to send first signaling, where the first signaling indicates a configuration parameter associated with each of the k RS resources or an index of a configuration parameter associated with each of the k RS resources.

The receiving module 1001 is configured to receive an RS on M RS resources. k is an integer greater than 0 and less than or equal to M, and M is a positive integer.

In a possible implementation, the first signaling includes a first field. When the first field indicates a first index, the configuration parameter index associated with each of the k RS resources is the first index; or when the first field indicates a first configuration parameter, the configuration parameter associated with each of the k RS resources is the first configuration parameter.

In a possible implementation, the first signaling includes a second field, and the second field includes at least k bits. The at least k bits indicate, in a bitmap manner, the configuration parameter associated with each of the k RS resources; or the at least k bits indicate, in a bitmap manner, the configuration parameter index associated with each of the k RS resources.

In a possible implementation, an RS resource ID of an RS resource corresponding to an $i^{th}$ bit in the at least k bits is less than an RS resource ID of an RS resource corresponding to an $(i+1)^{th}$ bit, where i is a positive integer.

In a possible implementation, a plurality of configuration parameters included in first configuration information corresponding to each RS resource indicate a periodicity value and/or a time domain offset value of the RS resource.

It should be noted that, for a specific execution process and an embodiment of the foregoing communication apparatus, refer to the steps performed by the network device or the terminal device and the related descriptions in the foregoing method embodiments. For a resolved technical problem and technical effect brought by resolving the technical problem, refer to the content described in the foregoing embodiments. Details are not described one by one herein again.

In this embodiment, the communication apparatus may be presented in a form of functional modules obtained through integration. The "module" herein may be a specific circuit, a processor for executing one or more software or firmware programs, a memory, an integrated logic circuit, and/or another component that may provide the foregoing function. In a simple embodiment, a person skilled in the art may figure out that the communication apparatus may be in a form shown in FIG. 5.

For example, a function/implementation process of the receiving module 1001 or the sending module 1002 in FIG. 10 may be implemented by the processor 501 in FIG. 5 by invoking computer program instructions stored in the memory 504. For example, functions/implementation processes of the sending module 1002 and the receiving module 1001 in FIG. 10 may be implemented through the communication interface 503 in FIG. 5.

In some implementations, the processor 501 in FIG. 5 may invoke the computer-executable instructions stored in the memory 504, so that the apparatus 500 can perform the operations performed by the network device or the terminal device in the foregoing method embodiments, to implement the foregoing possible implementation methods of this application.

The communication apparatuses in the foregoing apparatus embodiments may exactly correspond to the network device or the terminal device in the method embodiments, and a corresponding module or unit performs a corresponding step. For example, when the apparatus is implemented in a form of a chip, the communication unit may be an interface circuit that is of the chip and that is configured to receive a signal from another chip or apparatus. The communication unit for sending or receiving is an interface circuit of the apparatus, and is configured to send a signal to another apparatus. For example, when the apparatus is implemented in the form of the chip, the communication unit may be an interface circuit configured to send a signal to another chip or apparatus.

In an example embodiment, a computer-readable storage medium or a computer program product that includes instructions is further provided. The instructions may be executed by the processor 501 of the communication apparatus 500 to complete the methods in the foregoing embodiments. Therefore, for the technical effect that can be obtained by the computer-readable storage medium or the computer program product, refer to the foregoing method embodiments. Details are not described herein again.

This application further provides a computer program product. The computer program product includes instructions. When the instructions are executed, a computer can perform the operations performed by the network device or the terminal device corresponding to the foregoing method.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a communication apparatus to which the chip is applied performs the operation performed by the network device or the terminal device in the method provided in embodiments of this application.

Optionally, any communication apparatus provided in embodiments of this application may include the system chip.

Optionally, the computer instructions are stored in a storage unit.

An embodiment of this application further provides a communication system. The communication system may include any network device and at least one terminal device in the foregoing implementations.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Terms such as "component", "module", and "system" used in this application indicate computer-related entities. The computer-related entities may be hardware, firmware, combinations of hardware and software, software, or software in running. For example, a component may be, but is not limited to, a process that is run on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and according to, for example, a signal having one or more data packets (for example, data from one component that interacts with another component in a local system or a distributed system, and/or interacts with another system via a network such as the internet by using a signal).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, combinations of these schemes may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, one of information (information), signal (signal), message (message), or channel (channel) may be interchangeably used sometimes. It should be noted that expressed meanings are consistent when differences are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized. "System" and "network" may be interchangeably used sometimes, and meanings expressed by the terms are the same when differences of the terms are not emphasized. For example, "communication system" refers to "communication network".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

    obtaining configuration information, wherein the configuration information is used to configure a plurality of reference signal RS resource sets, and the plurality of RS resource sets comprise at least a first resource set and a second resource set;

obtaining first signaling, wherein the first signaling indicates to activate the second resource set, and the first resource set is deactivated when the second resource set is activated; and
sending a first RS on an RS resource comprised in the second resource set.

2. The method according to claim 1, wherein resource types of the first resource set and the second resource set are set to semi-persistent.

3. The method according to claim 1 or 2, wherein before the sending a first RS on an RS resource comprised in the second resource set, the method further comprises:
stopping sending a second RS on an RS resource comprised in the first resource set.

4. The method according to claim 3, wherein the sending a first RS and the stopping sending a second RS specifically comprise:

obtaining the first signaling in a first time unit; and
stopping sending the second RS starting from a time unit after a first time interval elapses in the first time unit; and/or
sending the first RS starting from a time unit after a second time interval elapses in the first time unit.

5. The method according to any one of claims 1 to 4, wherein the configuration information further indicates that usage corresponding to the first resource set and usage corresponding to the second resource set are both set to antenna switching.

6. The method according to any one of claims 1 to 5, wherein the first resource set and the second resource set are associated with a same antenna configuration.

7. The method according to any one of claims 1 to 6, wherein the first resource set and the second resource set correspond to a same spatial relation.

8. The method according to any one of claims 1 to 7, wherein the method further comprises:
reporting capability information to a network device, wherein the capability information indicates that a quantity of RS resource sets that are simultaneously in an active state and that are supported by a terminal device is 1, or the capability information indicates that the terminal device supports deactivation of the first resource set when the second resource set is activated.

9. A communication method, wherein the method comprises:

sending configuration information, wherein the configuration information is used to configure a plurality of reference signal RS resource sets, and the plurality of RS resource sets comprise at least a first resource set and a second resource set;
sending first signaling, wherein the first signaling indicates to deactivate the first resource set when the second resource set is activated; and
receiving a first RS on an RS resource comprised in the second resource set.

10. The method according to claim 9, wherein resource types of the first resource set and the second resource set are set to semi-persistent.

11. The method according to claim 9 or 10, wherein before the receiving a first RS on an RS resource comprised in the second resource set, the method further comprises:
stopping receiving a second RS on an RS resource comprised in the first RS resource set.

12. The method according to claim 11, wherein the receiving a first RS and the stopping receiving a second RS specifically comprise:

sending the first signaling in a first time unit; and
stopping receiving the second RS starting from a time unit after a first time interval elapses in the first time unit; and/or
receiving the first RS starting from a time unit after a second time interval elapses in the first time unit.

13. The method according to any one of claims 9 to 12, wherein the configuration information further indicates that usage corresponding to the first resource set and usage corresponding to the second resource set are both set to antenna switching.

14. The method according to any one of claims 9 to 13, wherein the first resource set and the second resource set are associated with a same antenna configuration.

15. The method according to any one of claims 9 to 14, wherein the first resource set and the second resource set correspond to a same spatial relation.

16. The method according to any one of claims 9 to 15, wherein the method further comprises:
receiving capability information from a terminal device, wherein the capability information indicates that a quantity of RS resource sets that are simultaneously in an active state and that are supported by the terminal device is 1, or the capability information indicates that the terminal device supports deactivation of the first resource set when the second resource set is activated.

17. A communication apparatus, wherein the apparatus comprises a receiving module and a sending module, wherein

the receiving module is configured to obtain configuration information, wherein the configuration information is used to configure a plurality of reference signal RS resource sets, and the plurality of RS resource sets comprise at least a first resource set and a second resource set;
the receiving module is further configured to obtain first signaling, wherein the first signaling indicates to activate the second resource set, and the first resource set is deactivated when the second resource set is activated; and
the sending module is configured to send a first RS on an RS resource comprised in the second resource set.

18. The apparatus according to claim 17, wherein resource types of the first resource set and the second resource set are set to semi-persistent.

19. The apparatus according to claim 17 or 18, wherein the sending module is further configured to stop sending a second RS on an RS resource comprised in the first resource set.

20. The apparatus according to claim 19, wherein the receiving module is specifically configured to obtain the first signaling in a first time unit; and

the sending module is specifically configured to: stop sending the second RS starting from a time unit after a first time interval elapses in the first time unit; and/or
send the first RS starting from a time unit after a second time interval elapses in the first time unit.

21. The apparatus according to any one of claims 17 to 20, wherein the configuration information further indicates that usage corresponding to the first resource set and usage corresponding to the second resource set are both set to antenna switching.

22. The apparatus according to any one of claims 17 to 21, wherein the first resource set and the second resource set are associated with a same antenna configuration.

23. The apparatus according to any one of claims 17 to 22, wherein the first resource set and the second resource set correspond to a same spatial relation.

24. The apparatus according to any one of claims 17 to 23, wherein the sending module is further configured to report capability information to a network device, wherein the capability information indicates that a quantity of RS resource sets that are simultaneously in an active state and that are supported by the terminal device is 1, or the capability information indicates that the terminal device supports deactivation of the first resource set when the second resource set is activated.

25. A communication apparatus, wherein the apparatus comprises a sending module and a receiving module, wherein

the sending module is configured to send configuration information, wherein the configuration information is used to configure a plurality of reference signal RS resource sets, and the plurality of RS resource sets comprise at least a first resource set and a second resource set;

the sending module is further configured to send first signaling, wherein the first signaling indicates to deactivate the first resource set when the second resource set is activated; and

the receiving module is configured to receive a first RS on an RS resource comprised in the second resource set.

26. The apparatus according to claim 25, wherein resource types of the first resource set and the second resource set are set to semi-persistent.

27. The apparatus according to claim 25 or 26, wherein the receiving module is further configured to stop receiving a second RS on an RS resource comprised in the first RS resource set.

28. The apparatus according to claim 27, wherein the sending module is specifically configured to send the first signaling in a first time unit; and

the receiving module is specifically configured to: stop receiving the second RS starting from a time unit after a first time interval elapses in the first time unit; and/or

receive the first RS starting from a time unit after a second time interval elapses in the first time unit.

29. The apparatus according to any one of claims 25 to 28, wherein the configuration information further indicates that usage corresponding to the first resource set and usage corresponding to the second resource set are both set to antenna switching.

30. The apparatus according to any one of claims 25 to 29, wherein the first resource set and the second resource set are associated with a same antenna configuration.

31. The apparatus according to any one of claims 25 to 30, wherein the first resource set and the second resource set correspond to a same spatial relation.

32. The apparatus according to any one of claims 25 to 31, wherein the receiving module is further configured to receive capability information from a terminal device, wherein the capability information indicates that a quantity of RS resource sets that are simultaneously in an active state and that are supported by the terminal device is 1, or the capability information indicates that the terminal device supports deactivation of the first resource set when the second resource set is activated.

33. A communication apparatus, wherein the apparatus comprises a processor, and the processor is configured to perform the method according to any one of claims 1 to 8.

34. A communication apparatus, wherein the apparatus comprises a processor, and the processor is configured to perform the method according to any one of claims 9 to 16.

35. A computer-readable storage medium, wherein the computer-readable storage medium stores a computer program; and when the computer program is executed by a computer, the computer is enabled to perform the method according to any one of claims 1 to 8.

36. A computer-readable storage medium, wherein the computer-readable storage medium stores a computer program; and when the computer program is executed by a computer, the computer is enabled to perform the method according to any one of claims 9 to 16.

37. A computer program product, wherein the computer program product stores instructions; and when the instructions are executed by a computer, the method according to any one of claims 1 to 8 is implemented.

38. A computer program product, wherein the computer program product stores instructions; and when the instructions are executed by a computer, the method according to any one of claims 9 to 16 is implemented.

39. A communication system, wherein the communication system comprises the communication apparatus according to any one of claims 17 to 24 and the communication apparatus according to any one of claims 25 to 32.

Communication system

Network device

Antenna port 1:
uplink and downlink

Antenna port 2:
downlink

1   2

FIG. 1

FIG. 2

P SRS

SP SRS 2

The terminal device 1 deactivates the SP SRS 1 resource set

T1=80 ms

SP SRS 1

T3=10 ms

Terminal device 2

SP SRS 2

FIG. 3

T2=10 ms

SP SRS 1

A terminal device 1 activates an SP SRS 1 resource set

P SRS

t

| A/D | SRS resource set's cell ID | | | SRS resource set's cell BWP ID field | Octet 1 |
|---|---|---|---|---|---|
| R | R | C | SUL | SP SRS resource set ID | Octet 2 |
| $F_0$ | Resource ID(0) | | | | Octet 3 |

...

| $F_{M-1}$ | Resource ID(M−1) | | Octet N–M |
|---|---|---|---|
| R | Resource serving cell ID0 | Resource BWP ID0 | Octet N–M+1 |

...

| R | Resource serving cell ID(M−1) | Resource BWP ID(M−1) | Octet N |
|---|---|---|---|

FIG. 4a

| | | | | | | | | |
|---|---|---|---|---|---|---|---|---|
| A/D | SRS resource set's cell ID | | | | | SRS resource set's cell BWP ID field | | Octet 1 |
| R | R | C | SUL | SP SRS resource set ID | | | | Octet 2 |
| $F_0$ | Resource set serving cell ID0 | | | | | Resource BWP ID0 | | Octet 3 |
| Resource ID(0) | | | | | | | | Octet 4 |

...

| | | | |
|---|---|---|---|
| $F_{N-1}$ | Resource serving cell ID(N–1) | Resource BWP ID(N–1) | Octet 2N+1 |
| Resource ID(N–1) | | | Octet 2N+2 |

FIG. 4b

Communication apparatus 500

501                    507

| Processor | Processor |
|-----------|-----------|
| CPU 0 | CPU 0 |
| CPU 1 | CPU 1 |

Communication
line 502

504

Memory

503        505          506

| Communication interface | Output device | Input device |

FIG. 5

| Network device | Terminal device |

10: Send configuration information, where the configuration information is used to configure N RS resource sets; and the terminal device obtains the configuration information

20: Send first signaling, where the first signaling includes a first field; and the terminal device obtains the first signaling

30: Determine an activated RS resource set and/or a deactivated RS resource set in the N RS resource sets based on the first signaling

FIG. 6a

| Network device | | Terminal device |
|---|---|---|
| 601: Send configuration information, where the configuration information is used to configure a plurality of SRS resource sets; and the terminal device obtains the configuration information | → | |
| 602: Send first signaling; and the terminal device receives the first signaling | → | |
| 603: Send a first SRS on an SRS resource included in a second resource set; and the network device receives the first SRS | ← | |

FIG. 6b

| Network device | | Terminal device |
|---|---|---|
| 601: Send configuration information, where the configuration information is used to configure a plurality of SRS resource sets; and the terminal device obtains the configuration information | → | |
| 701: Send second signaling, where the second signaling indicates to activate a first resource set; and the terminal device receives the second signaling | → | |
| 702: Send a second RS on an RS resource included in the first resource set; and the network device receives the second RS | ← | |
| 602: Send first signaling; and the terminal device receives the first signaling | → | |
| 603: Send a first SRS on an SRS resource included in a second resource set; and the network device receives the first SRS | ← | |

FIG. 7

Network device | Terminal device

801: Send configuration information, where the configuration information is used to configure a plurality of RS resource sets; and the terminal device obtains the configuration information

802: Send first information and second information, where the first information indicates to deactivate a first resource set, and the second information indicates whether to activate a second resource set; and the terminal device receives the first information and the second information

803: Stop sending an RS on an RS resource included in the first resource set

FIG. 8

Network device | Terminal device

901: Send configuration information, where the configuration information includes M pieces of first configuration information; and the terminal device receives the configuration information

902: Send first signaling, where the first signaling indicates a configuration parameter associated with each of k RS resources; and the terminal device receives the first signaling

903: Send an RS on M RS resources based on a configuration parameter associated with each of the M RS resources; and the network device receives the RS on the M RS resources

FIG. 9

Communication apparatus 1000

Receiving module 1001

Sending module 1002

FIG. 10

## INTERNATIONAL SEARCH REPORT

International application No.

**PCT/CN2022/118760**

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; ENTXT; 3GPP: 参考信号, 资源, 集, 第一, 第二, 激活, 去激活, 发送, 接收, RS, resource, set, first, second, activate, send, receive

| C. | DOCUMENTS CONSIDERED TO BE RELEVANT | |
|---|---|---|
| Category* | Citation of document, with indication, where appropriate, of the relevant passages | Relevant to claim No. |
| X | CN 111869153 A (QUALCOMM INC.) 30 October 2020 (2020-10-30) claims 1-27, and description, paragraphs [0005]-[0140] | 1-39 |
| A | CN 110637418 A (TELEFONAKTIEBOLAGET LM ERICSSON (PUBL)) 31 December 2019 (2019-12-31) entire document | 1-39 |
| A | CN 111713125 A (QUALCOMM INC.) 25 September 2020 (2020-09-25) entire document | 1-39 |
| A | WO 2020143734 A1 (ZTE CORP.) 16 July 2020 (2020-07-16) entire document | 1-39 |

☐ Further documents are listed in the continuation of Box C. ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **28 November 2022** | **08 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/118760**

| Patent document cited in search report | | | Publication date (day/month/year) | Patent family member(s) | | | Publication date (day/month/year) |
|---|---|---|---|---|---|---|---|
| CN | 111869153 | A | 30 October 2020 | US | 2019274155 | A1 | 05 September 2019 |
| | | | | EP | 3763071 | A1 | 13 January 2021 |
| | | | | WO | 2019173068 | A1 | 12 September 2019 |
| CN | 110637418 | A | 31 December 2019 | WO | 2018203308 | A1 | 08 November 2018 |
| | | | | US | 2020068463 | A1 | 27 February 2020 |
| | | | | EP | 3619829 | A1 | 11 March 2020 |
| CN | 111713125 | A | 25 September 2020 | WO | 2019157761 | A1 | 22 August 2019 |
| | | | | US | 2021050972 | A1 | 18 February 2021 |
| | | | | WO | 2019158080 | A1 | 22 August 2019 |
| | | | | EP | 3753278 | A1 | 23 December 2020 |
| WO | 2020143734 | A1 | 16 July 2020 | CN | 111435877 | A | 21 July 2020 |

Form PCT/ISA/210 (patent family annex) (January 2015)

**EP 4 404 492 A1**

**REFERENCES CITED IN THE DESCRIPTION**

**Patent documents cited in the description**

- CN 202111162721